# EUROPEAN PATENT SPECIFICATION

(11) **EP 2 667 477 B1**
(45) Date of publication and mention of the grant of the patent: **04.05.2016**
(21) Application number: 12858033.9
(22) Date of filing: 13.09.2012
(51) Int. Cl.: H02J 3/46, H02J 3/38, G06Q 50/06, H02J 3/00, G05D 29/00, F24H 1/00, G05D 23/19, F24D 11/00, F24D 19/10, F24H 7/02

(54) **Distributed Power Generation System and Method of Controlling Distribution Power Generation System**
Verteiltes Stromerzeugungssystem und Verfahren zur Steuerung des Verteilten Stromerzeugungssystems
Système de Génération d'Energie Distribuée et son Procédé de Commande

(30) Priority: 14.12.2011 JP 2011273150
(43) Date of publication of application: 27.11.2013
(73) Proprietor: Panasonic Corporation, Kadoma-shi, Osaka 571-8501 (JP)
(72) Inventor: FUJII, Masashi, Osaka 540-6207 (JP); KATOU, Motomichi, Osaka 540-6207 (JP); SHIMADA, Takanori, Osaka 540-6207 (JP)
(74) Representative: Grünecker Patent- und Rechtsanwälte PartG mbB
(86) International application number: PCT/JP2012/005820
(87) International publication number: WO 2013/088611

(56) References cited:
- WO-A1-2009/015331
- JP-A- 2002 281 568
- JP-A- 2004 286 008
- JP-A- 2005 287 210
- JP-A- 2007 280 650
- JP-A- 2008 021 152
- JP-A- 2010 259 303
- JP-A- 2011 050 131
- JP-A- 2011 181 377
- SHUNSUKE OZOE ET AL: "A Two-Stage Stochastic Mixed-Integer Programming Approach to the Smart House Scheduling Problem", ELECTRICAL ENGINEERING IN JAPAN, vol. 186, no. 4, 12 December 2013 (2013-12-12), pages 48-58, XP055104843, US ISSN: 0424-7760, DOI: 10.1002/eej.22336

## Description

### Technical Field

The present invention relates to a distributed power generation system configured to generate electric power and heat and installable in combination with a solar cell, and to a method of operating the distributed power generation system.

### Background Art

In recent years, the use of distributed power generators that generate electric power and heat has been drawing attention as one of the solutions for global environmental problems. Exhaust heat generated when such a distributed power generator performs power generation may be stored in a heat storage apparatus and the stored heat may be used for hot water supply and heating, and thus energy saving can be realized. The heat generated when the power generation is performed can be readily used particularly in households. Therefore, compact household distributed power generators are expected to spread widely. For example, gas engines including a power generator and fuel cells are used as such distributed power generators, and they are already put in practical use and are on the market. However, in general, these distributed power generators are expensive. Therefore, in order to widely spread such distributed power generators, the economic benefits (cost advantage) of the distributed power generators need to be increased.

There are cases where such a distributed power generator is installed together with a solar cell in the same house or building. Currently, for example in Japan, electric power generated by solar cells can be sold at a high unit price thanks to a feed-in tariff system. In contrast, selling of electric power generated by distributed power generators is not allowed. In addition, even in other countries where the selling of electric power generated by distributed power generators is allowed, the unit selling price is often low.

There is a known energy supply system intended to operate a co-generation unit (distributed power generator) and a solar power generator at low cost (see Patent Literature 1, for example). Patent Literature 1 discioses an energy supply system configured to obtain a predicted thermal load amount of a heat load device, and perform cost calculation based on: a predicted amount of electric power generated by a co-generation unit, the electric power being generated when a thermal load following operation generating heat in an amount that covers the predicted thermal load amount is performed; a predicted amount of electric power generated by a solar power generator; a predicted power load amount of an electrical load device; a price for selling electric power to a commercial power system; and a price for buying electric power from the commercial power system. The energy supply system is configured to operate the co-generation unit such that a cost for supplying electric power and heat to the electrical load device and the heat load device, the cost being obtained from the above cost calculation, becomes a low cost at least under the condition that the selling of electric power generated by the solar power generator is allowed.

### Citation List

### Patent Literature

PTL 1: Japanese Laid-Open Patent Application Publication No. 2005-287210

### Summary of Invention

### Technical Problem

However, prediction of the amount of electric power consumed by a user's electrical load, the amount of heat consumed by a user's heat load, and the amount of electric power generated by a solar cell is technically challenging and an error in the prediction is significant. It is particularly difficult to accurately predict the amount of heat consumed by a heat load in a household having an irregular lifestyle. Since the energy supply system disclosed in Patent Literature 1 determines an operation period of the co-generation unit based on such predicted values possibly containing significant errors, there are cases where the prediction turns out wrong, resulting in poor cost saving performance, and thus economic benefits cannot be increased sufficiently.

The energy supply system disclosed in Patent Literature 1 obtains weather data via an information communication line in order to improve the accuracy of the prediction of the amount of electric power to be generated by the solar power generator. Although it is particularly desirable that household distributed power generation systems be available at inexpensive prices, incorporating a device connected to an information communication line into a distributed power generation system causes an increase in the price of the system, resulting in low economic benefits, and it is difficult for such distributed power generation systems to become widespread.

In view of the above-described problems, an object of the present invention is to provide a distributed power generation system and a method of operating the distributed power generation system, the distributed power generation system being configured to operate in an operation mode in which a priority period is set such that power generation by a distributed power generator in the priority period is prioritized over power generation by the distributed power generator in other periods, thereby maximizing the selling of electric power generated by a solar cell and increasing economic benefits.

### Solution to Problem

A solution to the above-described problems is achieved by the features of the independent claims.

The amount of selling of electric power generated by the solar cell can be maximized by setting the priority period in which the power generation by the distributed power generator is prioritized. Moreover, whether to operate the distributed power generator in periods other than the priority period is determined based on load data of a user. Accordingly, the distributed power generator can be operated in such a manner as to maximize a predetermined standard (energy efficiency or environmental friendliness) under the condition that the power generation is performed in the priority period.

A method of operating a distributed power generation system according to the present invention is a method of controlling a distributed power generation system installable in combination with a solar cell. The distributed power generation system includes: a distributed power generator configured to perform power generation by using a fuel supplied thereto to generate electric power and heat, and supply the electric power and the heat to an electrical load and a heat load; and a controller configured to create an operation plan of the distributed power generator, and control at least start-up and stop of the distributed power generator. The method includes: receiving load data of at least one of the electrical load and the heat load; setting a priority period based at least one of a sunrise time and a sunset time, such that power generation by the distributed power generator in the priority period is prioritized over power generation by the distributed power generator in other periods; determining based on at least the load data whether to cause the distributed power generator to perform power generation in the other periods different from the priority period; creating the operation plan by setting at least one of a start-up time and a stop time of the distributed power generator; and controlling the distributed power generator based on the operation plan.

The amount of selling of electric power generated by the solar cell can be maximized by setting the priority period in which the power generation by the distributed power generator is prioritized. Moreover, whether to operate the distributed power generator in periods other than the priority period is determined based on load data of a user. Accordingly, the distributed power generator can be operated in such a manner as to maximize a predetermined standard (energy efficiency or environmental friendliness) under the condition that the power generation is pertormed in the priority period.

The above object, other objects, features, and advantages of the present invention will be made clear by the following detailed description of preferred embodiments with reference to the accompanying drawings.

### Advantageous Effects of Invention

According to the present invention, the amount of selling of electric power generated by the solar cell can be maximized by setting the priority period such that power generation by the distributed power generator in the priority period is prioritized over power generation by the distributed power generator in the other periods, the priority period being set without depending on the following factors: a predicted value of the amount of electric power to be generated by the solar cell; a predicted value of the amount of electric power to be generated by the distributed power generator; and predicted values of an electrical load and a heat load of a user.

### Brief Description of Drawings

[Fig. 1] Fig. 1 is a block diagram showing a schematic configuration of a distributed power generation system according to Embodiment 1.
[Fig. 2] Fig. 2 is a schematic diagram showing a schematic configuration of a controller included in the distributed power generation system shown in Fig. 1.
[Fig. 3] Fig. 3 is a flowchart briefly showing a first operation mode of a distributed power generator in the distributed power generation system according to Embodiment 1.
[Fig. 4] Fig. 4 is a conceptual diagram showing an example of sunrise and sunset times.
[Fig. 5] Fig. 5 is a schematic diagram showing the concept of correspondence determination between an operation plan and a priority period.
[Fig. 6A] Fig. 6A shows a flowchart of calculation of a predetermined standard in an operation plan.
[Fig. 6B] Fig. 6B shows the flowchart of calculation of the predetermined standard in the operation plan.
[Fig. 7] Fig. 7 is a schematic diagram showing piping heat radiation loss coefficients.
[Fig. 8] Fig. 8 is a table showing power generation start times and power generation end times of a solar cell for past seven days from a particular day.
[Fig. 9] Fig. 9 is a conceptual diagram of a process of reducing a priority period.
[Fig. 10] Fig. 10 is a flowchart in the case of reducing the priority period.
[Fig. 11] Fig. 11 is a flowchart schematically showing a power generation operation of a distributed power generator (power generation unit) of a distributed power generation system according to Embodiment 4 in a priority period.

### Description of Embodiments

Hereinafter, distributed power generation systems according to preferred embodiments of the present invention are described with reference to the drawings. In the drawings, the same or corresponding components are denoted by the same reference signs, and a repetition of the same description is avoided. In the drawings, there are cases where only the components necessary for describing the present invention are shown and the other components are omitted. Father, the present invention is not limited by the embodiments described below.

### (Embodiment 1)

A distributed power generation system according to Embodiment 1 serves as an example where the distributed power generation system is installable in combination with a solar cell and includes: a distributed power generator configured to perform power generation by using a fuel supplied thereto to generate electric power and heat, and supply the electric power and the heat to an electrical load and a heat load; and a controller configured to create an operation plan of the distributed power generator, and control at least start-up and stop of the distributed power generator. The controller is configured to receive load data of at least one of the electrical load and the heat load. The controller is further configured to execute a first operation mode including: setting at least one of a start-up time and a stop time of the distributed power generator to create the operation plan, by setting a priority period based on at least one of a sunrise time and a sunset time, such that power generation by the distributed power generator in the priority period is prioritized over power generation by the distributed power generator in other periods, and determining based on at least the load data whether to cause the distributed power generator to perform power generation in the other periods different from the priority period, and controlling the distributed power generator based on the operation plan.

In the distributed power generation system according to Embodiment 1, the distributed power generator may include: a power generation unit configured to perform joint supplying of the electric power and the heat; and a heat accumulator configured to store the heat supplied from the power generation unit. The controller may be configured to set an amount of electric power to be generated by the power generation unit in the priority period so as to follow the load data of the electrical load, and cause the power generation unit to perfonn power generation in the priority period in a manner to follow the load data of the electrical load.

In the distributed power generation system according to Embodiment 1, the controller may further include a solar cell detector configured to detect installation of the solar cell. The controller may be configured to execute the first operation mode when the solar cell detector has detected installation of the solar cell.

In the distributed power generation system according to Embodiments 1, the controller may be configured to execute a second operation mode when the solar cell detector detects no installation of the solar cell. The second operation mode includes: creating the operation plan of the distributed power generator without taking the priority period into account; and controlling the distributed power generator based on the operation plan.

In the distributed power generation system according to Embodiment 1, the distributed power generation system may be configured such that supply of electric power generated by the distributed power generator to the electrical load is prioritized over supply of (electric power generated by the solar cell to the electrical load.

In the distributed power generation system according to Embodiment 1, the controller may store: a calendar; and the sunrise time and the sunset time which are set in conjunction with a date in the calendar.

In the distributed power generation system according to Embodiment 1, the controller may create the operation plan of the distributed power generator while determining a period from the sunrise time to the sunset time to be the priority period.

### [Configuration of Distributed Power Generation System]

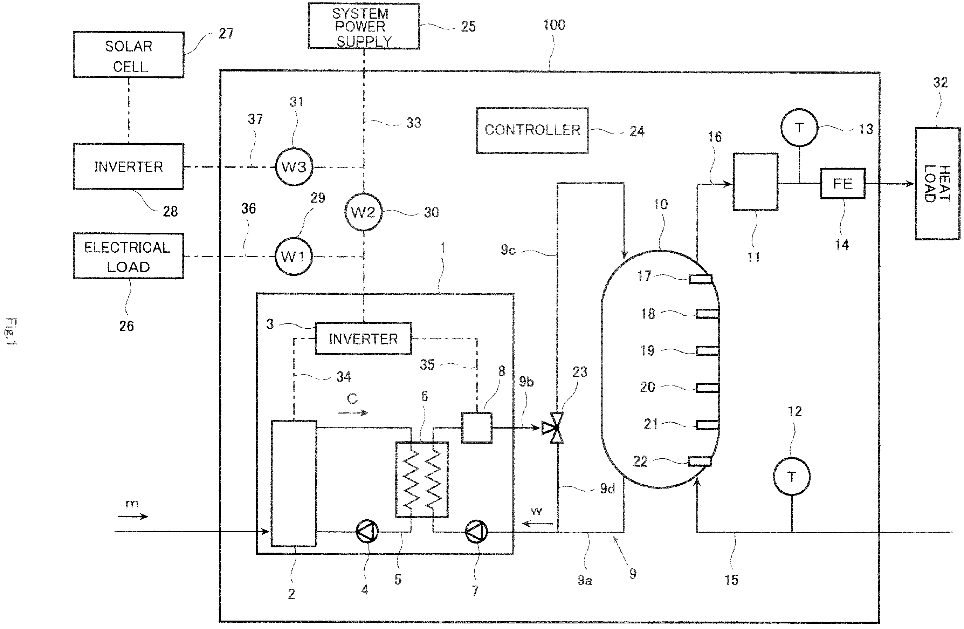

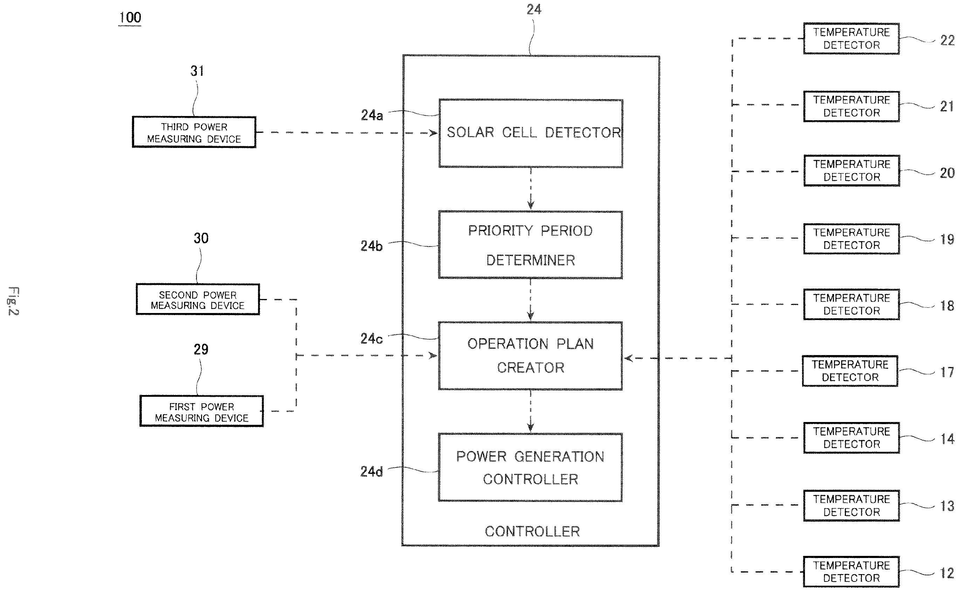

First, the configuration of a distributed power generation system 100 according to the present embodiment is described with reference to Fig. 1 and Fig. 2. Fig. 1 is a block diagram showing a schematic configuration of the distributed power generation system according to Embodiment 1. Fig. 2 is a schematic diagram showing a schematic configuration of a controller included in the distributed power generation system shown in Fig. 1. It should be noted that, in Fig. 1, solid lines connecting each device indicate piping and dashed-dotted lines indicate electrical cables.

As shown in Fig. 1 and Fig. 2, the distributed power generation system 100 according to Embodiment 1 includes: a distributed power generator 1 configured to generate electric power and heat; a hot water storage tank (heat accumulator) 10 configured to store the heat generated by the distributed power generator 1; and a controller 24 configured to control the distributed power generation system 100. The distributed power generation system 100 is configured such that a solar cell 27 and an inverter 28 can be both installed in the system. The inverter 28 serves to convert electric power generated by the solar cell 27 into electric power to be used by a system power supply 25.

The distributed power generator 1 includes: a power generation unit 2 configured to perform power generation with use of a raw material m; a heat exchanger 6 configured to perform heat exchange between a heating medium w and heat that is generated when the power generation unit 2 performs the power generation; and an inverter 3 configured to convert DC power generated by the power generation unit 2 into AC power to be used by an electrical load 26, the inverter 3 being an interconnection inverter.

The power generation unit 2 is typically a gas engine or fuel cell including a power generator. There are various types of fuel cells such as a solid polymer fuel cell (PEFC) and a solid oxide fuel cell (SOFC), and any type of fuel cell may be used as the power generation unit 2. Since fuel cells generate electric power through an electrochemical reaction between hydrogen and oxygen in air, if a fuel cell is used as the power generation unit 2, the power generation unit 2 may include a reformer (not shown) configured to perform reforming using the raw material m and steam (not shown) to generate hydrogen and carbon dioxide. The power generation unit 2 may also include a hydrogen tank. A raw material containing a hydrocarbon can be used as the raw material m. For example, natural gas, LPG, or kerosene may be used as the raw material m.

Cooling water piping 5 through which cooling water c flows is connected to the power generation unit 2. The cooling water c serves to recover heat that is generated when power generation is performed, and cool down the power generation unit 2. The heat exchanger 6, and a pump 4 serving to move the cooling water c, are provided on the cooling water piping 5.

Piping 9 through which the heating medium w flows is connected to the heat exchanger 6. The heat exchanger 6 is configured to perform heat exchange between the cooling water c serving to cool down the power generation unit 2 and the heating medium w. The use of the heat exchanger 6 prevents the heating medium w. which becomes hot water to be sent to a household heat load, from directly passing through the power generation unit 2. Thus, the use of the heat exchanger 6 prevents contamination of the heating medium w. It should be noted that, tor example, municipal water can be used as the heating medium w.

The piping 9 includes: piping 9a connecting the heat exchanger 6 and the lower part of the hot water storage tank 10; piping 9b connecting the heat exchanger 6 and a three-way valve 23; piping 9c connecting the three-way valve 23 and the upper part of the hot water storage tank 10; and piping 9d connecting the three-way valve 23 and the piping 9a. A reverse power flow prevention heater 8 is provided on the piping 9b.

The hot water storage tank 10 serves to store heat generated by the power generation unit 2. The heat generated by the power generation unit 2 is transmitted to the heating medium w via the cooling water c and the heat exchanger 6, and the heated heating medium w is stored in the hot water storage tank 10. Specifically, the heating medium w that flows out of the lower part of the hot water storage tank 10 flows through the piping 9a and is supplied to the heat exchanger 6. At the heat exchanger 6, the heating medium w exchanges heat with the cooling water c, and is thereby heated. The heated heating medium w flows through the piping 9b and the piping 9c, and is supplied to the upper part of the hot water storage tank 10. As a result, a thermal stratification is formed such that the temperature of the heating medium w in the upper part of the hot water storage tank 10 is high and the temperature of the heating medium w in the lower part of the hot water storage tank 10 is low.

The three-way valve 23 is configured to switch, between the piping 9c and the piping 9d, a destination to which the heating medium w flowing through the piping 9b flows. In cases where the temperature of the heating medium w after going through the heat exchange at the heat exchanger 6 is low, such as when the distributed power generator 1 is starting up, the controller 24 controls the three-way valve 23 such that the destination to which the heating medium w flowing through the piping 9b flows is switched to the piping 9d. In this manner, destruction of the thermal stratification, which is caused when the low-temperature heating medium w is supplied to the upper part of the hot water storage tank 10, can be prevented.

For the purpose of detecting the amount of heat stored in the hot water storage tank 10, temperature detectors 17 to 22 are attached to the hot water storage tank 10. Each of the temperature detectors 17 to 22 is configured to transmit their detected temperature to the controller 24 (see Fig. 2). Based on, for example, the temperatures detected by the temperature detectors 17 to 22 and the volume of the hot water storage tank 10, the controller 24 calculates the amount of heat stored in the hot water storage tank 10.

A hot water sending passage 16 is connected to the upper part of the hot water storage tank 10. The hot water sending passage 16 serves to send the heating medium w out of the hot water storage tank 10 to a heat load 32. A supplementing passage 15 is connected to the lower part of the hot water storage tank 10. The supplementing passage 15 serves to supplement the heating medium w when the amount of heating medium w has decreased due to being sent out of the hot water storage tank 10. Although the number of temperature detectors attached to the hot water storage tank 10 is six in Embodiment 1, the number of temperature detectors attached to the hot water storage tank 10 is not limited to six, but may be suitably determined based on, for example, the size and shape of the hot water storage tank 10.

A backup boiler 11 is provided on the hot water sending passage 16. The backup boiler 11 is configured to heat the heating medium w flowing through the hot water sending passage 16 in a case where the temperature of the heating medium w sent out of the hot water storage tank 10 is low. A temperature detector 13 configured to detect the temperature of the heating medium w flowing through the hot water sending passage 16, and a flow rate detector 14 configured to detect the flow rate of the heating medium w flowing through the hot water sending passage 16, are attached to the hot water sending passage 16. A temperature detector 12 serving to detect the temperature of the heating medium w flowing through the supplementing passage 15 is attached to the supplementing passage 15.

The temperature detectors 12, 13, and the flow rate detector 14 are connected to the controller 24 by signal cables, and are configured to transmit the detect temperatures and flow rate to the controller 24 (see Fig. 2). Based on such data transmitted to the controller 24, the controller 24 calculates the amount of heat that has been consumed by the heat load 32 (i.e., calculates heat load data), and stores a past heat load data history.

The distributed power generator 1 (to be exact, the inverter 3) is connected to the system power supply 25 via an electrical cable 33. The inverter 3 is connected to the power generation unit 2 via an electrical cable 34, and connected to the reverse power flow prevention heater 8 via an electrical cable 35.

The reverse power flow prevention heater 8 serves to prevent electric power generated by the distributed power generator 1 from reversely flowing to the system power supply 25. Specifically, if the amount of electric power generated by the distributed power generator 1 temporarily exceeds the amount of electric power consumed by the electrical load 26, then the inverter 3 supplies electric power to the reverse power flow prevention heater 8 and the reverse power flow prevention heater 8 consumes the electric power generated by the distributed power generator 1, thereby preventing a reverse power flow. It should be noted that the electric power consumed by the reverse power flow prevention heater 8 is converted into heat, and is stored in the hot water storage tank 10 as heat. In a case where the electric power generated by the distributed power generator 1 can be sold, the generated electric power need not be consumed by the reverse power flow prevention heater 8 but may be sold.

The electrical load 26 is connected to the electrical cable 33 via an electrical cable 36. A first power measuring device 29 is provided on the electrical cable 36. The first power measuring device 29 is configured to measure electric power consumed by the electrical load 26, and transmit the measured power to the controller 24. Based on the electric power measured by the first power measuring device 29, the controller 24 calculates an electric power amount for each of predetermined time slots, which will be described below. Then, the controller 24 stores, in a past electrical load data history, the calculated electric power amount as the amount of electric power consumed by the electrical load 26 (electrical load data).

For example, an ammeter may be used as the first power measuring device 29. Alternatively, both an ammeter and a voltmeter may be used as the first power measuring device 29. It should be noted that the electrical load 26 is an electrical appliance used by a user of the distributed power generation system 100. The electrical load 26 is, for example, a television, refrigerator, or washing machine.

A second power measuring device 30 is provided on the electrical cable 33 at a position that is closer to the system power supply 25 than a position connected to the electrical cable 36. The second power measuring device 30 is provided for the purpose of preventing a reverse power flow from the distributed power generator 1 to the system power supply 25. The second power measuring device 30 is configured to measure electric power at the electrical cable 33, and transmit the measured power to the controller 24. For example, an ammeter may be used as the second power measuring device 30. Alternatively, both an ammeter and a voltmeter may be used as the second power measuring device 30.

The solar cell 27 is connected via an electrical cable 37 to the electrical cable 33 at a position that is closer to the system power supply 25 than the position where the second power measuring device 30 is provided. Accordingly, the supply of electric power generated by the distributed power generator 1 to the electrical load 26 is prioritized over the supply of electric power generated by the solar cell 27 to the electrical load 26. Also, the supply of electric power generated by the solar cell 27 to the electrical load 26 is prioritized over the supply of electric power from the system power supply 25 to the electrical load 26.

The inverter 28 and a third power measuring device 31 are provided on the electrical cable 37. Specifically, the third power measuring device 31 is provided on the electrical cable 37 at a position that is closer to the system power supply 25 than the inverter 28. The inverter 28 is configured to convert DC power generated by the solar cell 27 into AC power.

The third power measuring device 31 is configured to measure the electric power generated by the solar cell 27, and transmit the measured power to the controller 24. For example, an ammeter may be used as the third power measuring device 31. Alternatively, both an ammeter and a voltmeter may be used as the third power measuring device 31.

As will hereinafter be described, the controller 24 (to be exact, a solar cell detector 24a) detects, based on the measured electric power transmitted from the third power measuring device 31, whether or not the solar cell 27 is installed in the distributed power generation system 100. It should be noted that, usually, the third power measuring device 31 is installed when the solar cell 27 is installed, and then test transmission to the controller 24 is performed. Therefore, if there is no transmission from the third power measuring device 31, the controller 24 can determine that the solar cell 27 is not installed.

The controller 24 is configured to automatically switch between a first operation mode and a second operation mode based on whether or not installation of the solar cell 27 has been detected. The first operation mode and the second operation mode will be described below. It should be noted that the determination as to whether or not the solar cell 27 is installed may be performed through a user's manual setting via a remote controller or the like.

The controller 24 includes a time keeping unit, a calculation unit, and a data storage unit, which are components for controlling the operation of the distributed power generator 1. Typically, the time keeping unit is a timer; the calculation unit includes a CPU and a memory; and the data storage unit is a non-volatile memory. Through the loading and execution of a predetennined control program by the calculation unit, the controller 24 realizes a solar cell detector (solar cell detection module) 24a, a priority period determiner (priority period determination module) 24b, an operation plan creator (operation plan creation module) 24c, and a power generation controller (power generation control module) 24d (see Fig. 2), thereby performing various control of the distributed power generation system 100.

The distributed power generation system 100 according to Embodiment 1 is configured such that electric power generated by the distributed power generator 1 is preferentially supplied to the electrical load 26. For this reason, if electric power generated by the distributed power generator 1 is supplied to the electrical load 26 in a period in which the solar cell 27 generates electric power, there is a tendency for the amount of selling of the electric power generated by the solar cell 27 to increase.

Accordingly, in a case where the power selling unit price of the solar cell 27 is high, performing power generation by the distributed power generator 1 in the daytime when the solar cell 27 performs power generation brings significant economic benefits. Therefore, the distributed power generation system 100 according to Embodiment 1 can maximize the amount of selling of the electric power generated by the solar cell 27, by performing operations described below.

### [Operations of Distributed Power Generation System]

Next, operations of the distributed power generation system 100 according to Embodiment 1 are described with reference to Fig. 1 to Fig. 7. Specifically, the first operation mode of the distributed power generator 1 is described. It should be noted that since a power generation operation of the distributed power generator 1 is performed in the same manner as that of a power generation operation of a general distributed power generator, a detailed description of the power generation operation is omitted.

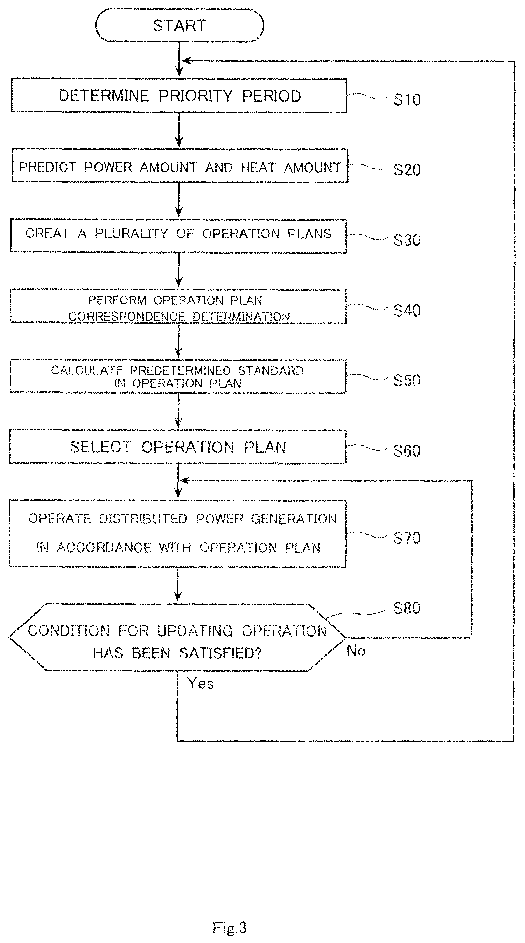

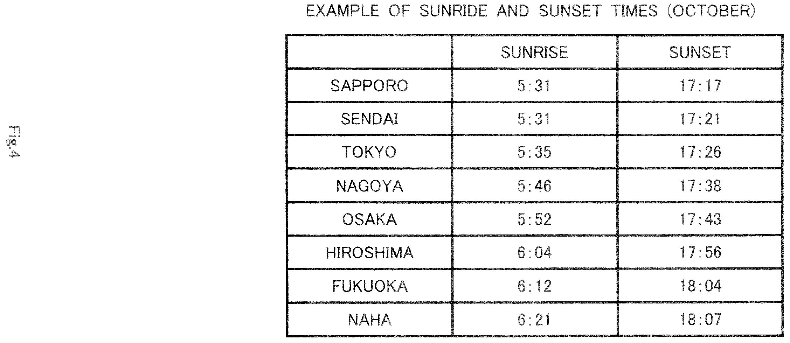

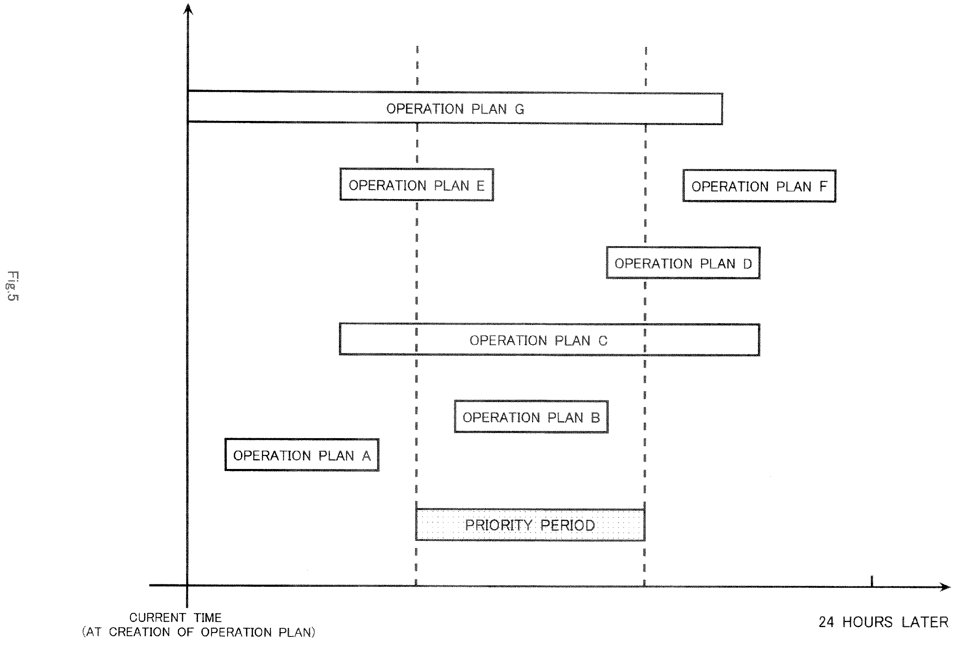

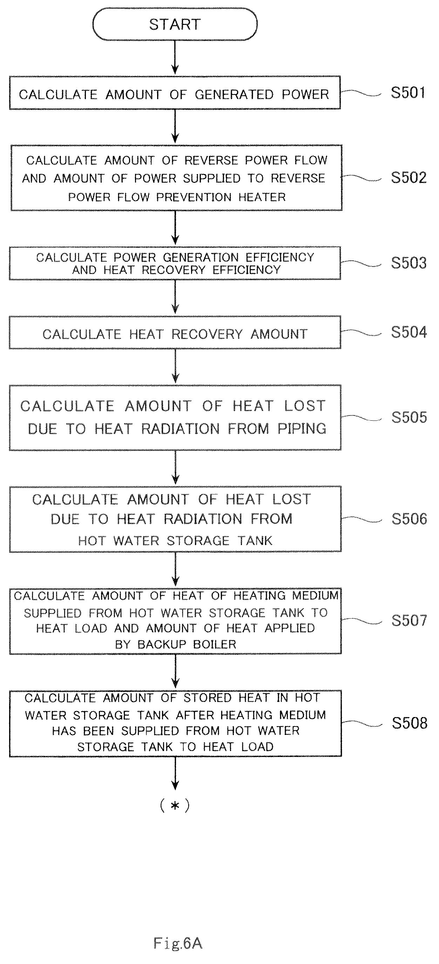

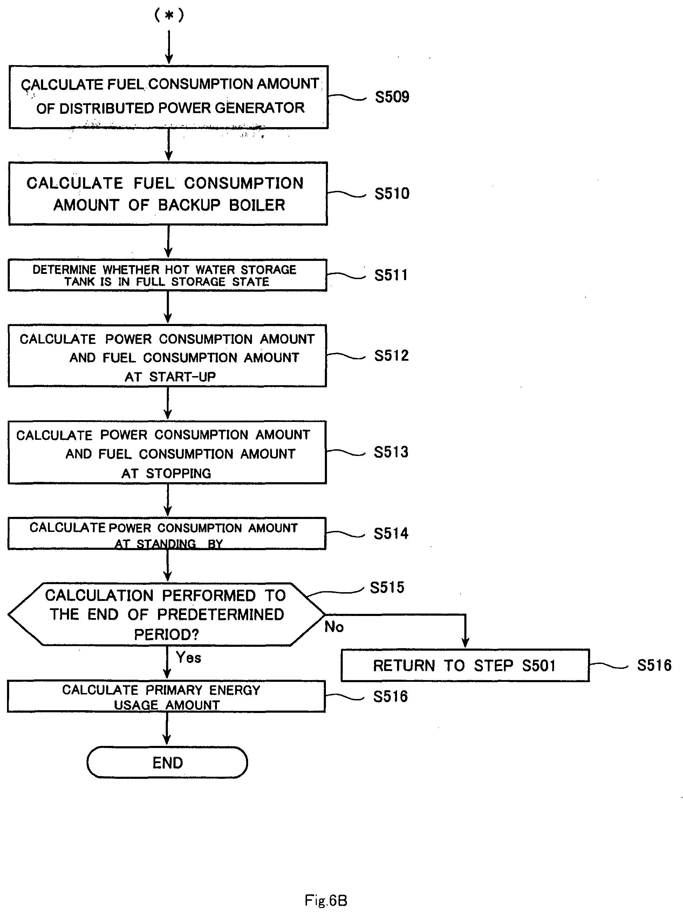

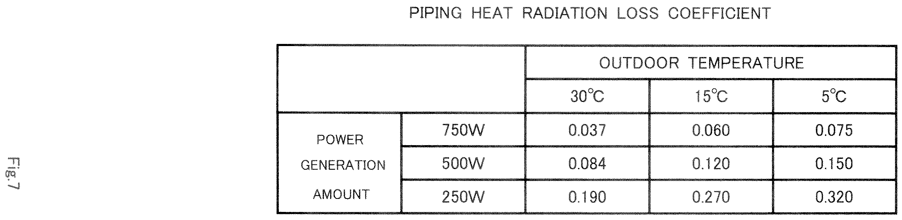

Fig. 3 is a flowchart briefly showing the first operation mode of the distributed power generator in the distributed power generation system according to Embodiment 1. Fig. 4 is a conceptual diagram showing an example of sunrise and sunset times. Fig. 5 is a schematic diagram showing the concept of correspondence determination between an operation plan and a priority period. Fig. 6A and Fig. 6B show a flowchart of calculation of a predetermined standard in an operation plan. Fig. 7 is a schematic diagram showing piping heat radiation loss coefficients.

It should be noted that, in the description below, the first operation mode shown in Fig. 3 will be briefly described first, and then each step of the first operation mode will be described in detail with reference to Fig. 4 to Fig. 7.

J As shown in Fig. 3, the priority period determiner 24b of the controller 24 determines a priority period based on, for example, information regarding sunrise and sunset times (step S10). It should be noted that, as will hereinafter be described, in Embodiment 1, the priority period determiner 24b determines a period from a sunrise time to a sunset time to be a priority period.

Next, based on histories of past electrical load data (the amount of electric power consumed by the electrical load 26) and past heat load data (the amount of heat consumed by the heat load 32), the operation plan creator 24c of the controller 24 predicts the amount of electric power to be consumed in a predetermined period (the amount of electric power to be consumed by the electrical load 26) and the amount of heat to be consumed in the predetermined period (the amount of heat to be consumed by the heat load 32) (step S20).

The predetermined period herein refers to a period that defines one cycle of repeated operation of the distributed power generator 1. The predetermined period is, for example, one day, one week, ten days, or one month. It should be noted that, in Embodiment 1, the description is given assuming that the predetermined period is 24 hours.

Next, the operation plan creator 24c of the controller 24 creates a plurality of operation plans (step S30). The operation plans specify, in the predetermined period, when to cause the distributed power generator 1 to perform power generation and when to stop the distributed power generator 1. In this step, the operation plan creator 24c of the controller 24 creates the plurality of operation plans without taking the priority period into account.

Next, the operation plan creator 24c of the controller 24 performs operation plan correspondence determination (step S40). Specifically, the operation plan creator 24c confirms whether the operation plans created in step S30 include the priority period. In Embodiment 1, the operation plan creator 24c excludes (deletes) operation plans that do not include the priority period, and only leaves operation plans that include the entire priority period. It should be noted that, alternatively, the operation plan creator 24c may only leave operation plans that include, at least partly, the priority period.

Next, based on the operation plans left in step S40, the operation plan creator 24c calculates predetermined standards (step S50) in a case where the distributed power generator 1 is operated. The predetermined standard herein may be, for example, any of the followings: energy efficiency; reduction amount of carbon dioxide which is a greenhouse gas; and economic efficiency.

Subsequently, the operation plan creator 24c selects one operation plan (step S60) such that the predetermined standard calculated for the selected operation plan is the highest standard among the predetermined standards calculated in step S50 for the respective operation plans. As one specific example, the operation plan creator 24c selects such an operation plan that the energy efficiency of the distributed power generator 1 becomes highest when the selected operation plan is executed.

Next, the power generation controller 24d of the controller 24 operates the distributed power generator 1 in accordance with the operation plan selected by the operation plan creator 24c (step S70). It should be noted that the power generation controller 24d sets the amount of electric power to be generated by the power generation unit 2 in the priority period so as to follow load data of the electrical load 26 (i.e., follow the amount of electric power consumed by the electrical load 26 or electric power measured by the first power measuring device 29), and controls the distributed power generator 1 to perform power generation in the priority period in a manner to follow the load data of the electrical load 26.

Then, the power generation controller 24d determines whether a condition for updating the operation plan is satisfied (step S80). Castes where a condition for updating the operation plan is satisfied include: a case where an error in a predicted value of the amount of electric power to be consumed by the electrical load 26 (i.e., a difference between the amount of electric power actually consumed by the electrical load 26 and the predicted value of the amount of electric power to be consumed by the electrical load 26) is a predetermined value or greater; a case where an error in a predicted value of the amount of heat to be consumed by the heat load 32 (i.e., a difference between the amount of heat actually consumed by the heat load 32 and the predicted value of the amount of heat to be consumed by the heat load 32) is a predetermined value or greater; and a case where a divergence of the amount of heat actually stored in the hot water storage tank 10 from the amount of heat to be stored in the hot water storage tank 10 according to the operation plan has become great. Of course, it is understood that a case where a predetermined period (in the present embodiment, 24 hours) has elapsed after selecting the operation plan in step S60 satisfies a condition for updating the operation plan.

Here, a description is given of a reason for the operation plan to be updated before the operation to the end of the predetermined period is completed. Usually, errors arise in the predicted values of the electrical load 26 and the heat load 32. Therefore, the longer the elapsed time after the creation of an operation plan, the greater the divergence of the actual operation from the operation plan. If it is determined that there is a great divergence, the operation plan may be updated and thereby the operation plan can be modified into a plan that takes account of, for example, the amount of heat stored in the hot water storage tank 10 and the operation state of the distributed power generator 1 at the point of update of the operation plan. Accordingly, for example, if a predicted value of the amount of heat to be consumed by the heat load 32 (hereinafter, referred to as a predicted amount of heat consumed by the heat load 32) is less than an actual value and the amount of stored heat is insufficient, a power generation period may be extended and thereby a heat recovery amount can be increased.

If a condition for updating the operation plan is not satisfied (No in step S80), the power generation controller 24d returns to step S70 and continues the operation with the current operation plan. On the other hand, if a condition for updating the operation plan is satisfied (Yes in step S80), the power generation controller 24d returns to step S10 and updates the operation plan.

It should be noted that while the controller 24 is executing the first operation mode, the detectors such as the temperature detector 12 detect a water temperature and the like as needed, and the detected data are transmitted to the controller 24. Based on the transmitted data, the controller 24 calculates, for example, the amount of consumed electric power or the amount of stored heat, and stores the calculated amount of electric power or the like together with time information.

In a case where the solar cell 27 is not connected (i.e., a case where the solar cell detector 24a does not detect the solar cell 27), it is desirable for the distributed power generation system 100 according to Embodiment 1 to operate in the second operation mode which does not take the priority period into account. It should be noted that the second operation mode is executed as a result of the following operation being performed by the operation plan creator 24c: without performing step S40, which is the step of operation plan correspondence determination, the operation plan creator 24c calculates a predetermined standard for each of the operation plans created in step S30 (step S50), and selects one operation plan in which the standard becomes highest among the operation plans.

### [Steps S10 to S50 of First Operation Mode]

Next, steps S10 to S50 of the first operation mode of the distributed power generator 1 are further described in detail.

### (1) Step S10

In step S10, the priority period determiner 24b determines the priority period in which power generation by the distributed power generator 1 is prioritized. Since the solar cell 27 generates electric power in the presence of the sun, the priority period may be a period from a sunrise time to a sunset time. It should be noted that the sunrise time and the sunset time vary depending on the season and place. Therefore, the priority period determiner 24b may refer to the sunrise and sunset times in a manner described below. For example, a table as shown in Fig. 4 may be prestored in the controller 24 for each month; and the priority period determiner 24b may refer to, based on the prestored table and time keeping information obtained via a calendar function (the time keeping unit) of the controller 24, the sunrise and sunset times of the month at a location that is closest to the installation location of the distributed power generation system 100.

It should be noted that if the predetermined period is longer than 24 hours (one day) such as 48 hours (two days) or 72 hours (three days), then it is necessary to extend the priority period to cover the second and third days. It should be noted that, in Embodiment 1, prestored sunrise and sunset times define the priority period.

As described above, in Embodiment 1, the priority period is detennined without using any of the following factors: a predicted value of the amount of electric power to be generated by the solar cell 27; a predicted value of the electrical load 26 (hereinafter, referred to as a predicted amount of electric power consumed by the electrical load 26) of the user; and a predicted value of the heat load 32 (hereinafter, referred to as a predicted amount of heat consumed by the heat load 32) of the user. Therefore, without being affected by prediction errors, the distributed power generator 1 is caused to perform a power generation operation while the solar cell 27 is generating electric power, and electric power generated by the distributed power generator 1 is preferentially consumed by the electrical load 26. This makes it possible to maximize the amount of selling of the electric power generated by the solar cell 27.

### (2) Step S20

In step S20, the operation plan creator 24c predicts the amount of electric power to be used by the electrical load 26 in the predetermined period and the amount of heat to be used by the heat load 32 in the predetermined period. Load predicting methods that can be used herein range from a simple method (e.g., an average of load values in past three days is used as a predicted value) to a relatively complex method using a neural network. Any of these methods may be used. In general, complex prediction methods realize more accurate prediction. However, in such a complex method, processing requires a large storage area and a calculation time becomes long. Therefore, a designer of the distributed power generation system 100 may choose a prediction method that matches the performance of the controller 24.

### J (3) Step S30

In step S30, the operation plan creator 24c divides the predetermined period into predetermined time slots (e.g., each time slot is one hour), and sets for each divided time slot whether to operate or stop the distributed power generator 1, thereby creating an operation plan. It is desirable that the predetermined time slot be short. However, the shorter the time slot, the longer the calculation time of the controller 24. In Embodiment 1, a description is given below assuming that the predetermined time slot is one hour.

In Embodiment 1, the predetermined period is 24 hours. Accordingly, when an operation plan of the distributed power generator 1, i.e., whether to operate or stop the distributed power generator 1, is assigned to each hour, the total number of operation pattern combinations becomes vast 2²⁴=16777216 combinations. If the predetermined period is set to 48 hours or 72 hours, the total number of operation pattern combinations will be further increased.

Since the calculation time becomes longer in accordance with an increase in the number of operation pattern combinations, it is usual that the number of combinations is kept to be small in a manner described below. For example, the number of combinations can be kept small by limiting the number of power generation operations performed in one day to once or twice, and limiting a power generation period per power generation operation to 3 hours or longer.

### (3) Step S40

In step S40, the operation plan creator 24c determines whether each of the plurality of operation plans created in step S30 satisfies a condition for the priority period. Specifically, assume, for example, that the operation plan creator 24c creates operation plans A to G as shown in Fig. 5. Among these operation plans, operation plans including the entire priority period (i.e., operation plans corresponding to the priority period) are operation plans C and G Therefore, the operation plan creator 24c leaves the operation plan C and the operation plan G and excludes any other operation plans. In this manner, the operation plan creator 24c perform operation plan correspondence determination.

### (4) Step S50

As described above, the predetermined standard may be, for example, any of the followings: energy efficiency; economic efficiency; and reduction amount of carbon dioxide which is a greenhouse gas. Hereinafter, with reference to Fig. 6A and Fig. 6B, a detailed description is given of a case where energy efficiency is used as the predetermined standard.

It should be noted that, as will hereinafter be described, processing (calculation) from steps S501 to S514 in a flowchart shown in Fig. 6A and Fig. 6B is performed for each predetermined time slot, and calculation of a primary energy reduction amount in step S516 is performed only once at last. Specifically, in Embodiment 1, the predetermined period is 24 hours and the predetermined time slot is one hour, and therefore, the calculation from steps S501 to S514 in the calculation of the predetermined standard for one operation plan is performed 24 times.

The energy efficiency herein refers to a primary energy usage amount in a case where the distributed power generator 1 is operated in accordance with an operation plan. An operation plan in which the primary energy usage amount is kept to a small value is determined to be excellent in terms of energy efficiency. It should be noted that the distributed power generation system 100 according to Embodiment 1 is configured such that electric power generated by the distributed power generator 1 is preferentially used by the electrical load 26. Therefore, in the evaluation of the primary energy usage amount, the amount of electric power generated by the solar cell 27 need not be taken into account.

As shown in Fig. 6A and Fig. 6B, first, the operation plan creator 24c of the controller 24 calculates the amount of electric power generated by the distributed power generator 1 (step S501). The amount of electric power generated by the distributed power generator 1 is zero while the operation of the distributed power generator 1 is stopped. Further, it takes a few minutes to a few hours from when the start-up of the distributed power generator 1 is started to when the power generation by the distributed power generator 1 is started. Also during this period, the amount of electric power generated by the distributed power generator 1 is zero.

It should be noted that there is a case where the distributed power generator 1 performs rated power generation regardless of the amount of electric power used by the electrical load 26, and also a case where the distributed power generator 1 performs power generation such that the amount of electric power generated by the distributed power generator 1 follows the amount of electric power used by the electrical load 26 or electric power measured by the first power measuring device 29. The former often applies if the distributed power generator 1 is a gas engine, and the latter often applies if the distributed power generator 1 is a fuel cell. If the distributed power generator 1 performs only the rated power generation, the amount of electric power generated by the distributed power generator 1 is assumed to be a rated power generation amount. On the other hand, if the distributed power generator 1 performs power generation in a load-following manner, the amount of electric power generated by the distributed power generator 1 is assumed to be a load-following power generation amount (i.e., a predicted amount of electric power consumed by the electrical load 26)

Next, the operation plan creator 24c calculates the amount of reverse power flow and the amount of electric power supplied to the reverse power flow prevention heater 8, based on the predicted amount of electric power consumed by the electrical load 26 and the amount of electric power generated by the distributed power generator 1 (step S502). Both of the amount of reverse power flow and the amount of electric power supplied to the reverse power flow prevention heater 8 are zero if the amount of electric power generated by the distributed power generator 1 is less than or equal to the predicted amount of electric power consumed by the electrical load 26. On the other hand, if the amount of electric power generated by the distributed power generator 1 is greater than the predicted amount of electric power consumed by the electrical load 26, then the amount of surplus power is calculated by subtracting the predicted amount of electric power consumed by the electrical load 26 from the amount of electric power generated by the distributed power generator 1.

It should be noted that in a case where reverse power flow from the distributed power generator 1 is not allowed, the amount of electric power supplied to the reverse power flow prevention heater 8 = the amount of surplus power, and the amount of reverse power flow = 0. On the other hand, in a case where reverse power flow from the distributed power generator 1 is allowed, the amount of electric power supplied to the reverse power flow prevention heater 8 = 0, and the amount of reverse power flow = the amount of surplus power.

Next, the operation plan creator 24c calculates power generation efficiency and heat recovery efficiency (step S503). The power generation efficiency and the heat recovery efficiency are values varying depending on the amount of electric power generated by the distributed power generator 1, and are values specific to the distributed power generator 1. Therefore, values of the power generation efficiency and values of the heat recovery efficiency in relation to the amount of electric power generated by the distributed power generator 1 are prestored in the controller 24, and the operation plan creator 24c can calculate the power generation efficiency and the heat recovery efficiency from these values.

Next, the operation plan creator 24c calculates a heat recovery amount (step S504). Specifically, the heat recovery amount can be calculated in the following manner: (amount of electric power generated by the distributed power generator 1) × (heat recovery efficiency of the distributed power generator 1) ÷ (power generation efficiency of the distributed power generator 1) × (predetermined time slot (here, one hour)) + (amount of electric power supplied to the reverse power flow prevention heater 8) × (heater efficiency). It should be noted that the heater efficiency is a value specific to the distributed power generator 1, and is approximately 0.9, for example.

Next, the operation plan creator 24c calculates the amount of heat lost due to heat radiation from the piping 9 (hereinafter, referred to as piping heat radiation loss) (step S505). The piping heat radiation loss can be calculated in the following manner: heat recovery amount × piping heat radiation loss coefficient. Hereinafter, the piping heat radiation loss coefficient is described with reference to Fig. 7. Fig. 7 shows piping heat radiation loss coefficients in a case where a household solid polymer fuel cell is used as the distributed power generator 1, and shows actual measurement values in a case where the distributed power generation system 100 is installed in one household.

As shown in Fig. 7, the lower the outdoor temperature, the greater the piping heat radiation loss coefficient, and also, the less the amount of electric power generated by the distributed power generator 1, the greater the piping heat radiation loss coefficient. The reason for this is described below.

Usually, the flow rate of the heating medium w in the piping 9 is controlled such that the temperature at an outlet of the distributed power generator 1 (i.e., at a position where the heating medium w is discharged from the distributed power generator 1 to the piping 9; the upstream end of the piping 9b) becomes constant. For this reason, in accordance with a decrease in the amount of electric power generated by the distributed power generator 1, the flow rate of the heating medium w decreases, and as a result, the heating medium w stays in the piping 9, and consequently, the heat radiation loss coefficient becomes great.

As described above, the piping heat radiation loss coefficient varies depending on the outdoor temperature or the amount of electric power generated by the distributed power generator 1. Therefore, the data shown in Fig. 7 may be prestored in the controller 24, and the operation plan creator 24c may perform linear interpolation by using a power generation amount and an outdoor temperature, thereby calculating the piping heat radiation loss coefficient. Moreover, at the time of installation of the distributed power generator 1, an actual piping heat radiation loss coefficient may be measured and the measured value may be stored in the controller 24. Then, the operation plan creator 24c may use the value. Furthermore, in a case where actual measurement and prediction are difficult, a general value may be set as the piping heat radiation loss coefficient.

Next, the operation plan creator 24c calculates the amount of heat lost due to heat radiation from the hot water storage tank 10 (hereinafter, referred to as hot water storage tank heat radiation loss) (step S506). The hot water storage tank heat radiation loss can be calculated in the following manner: (amount of stored heat in the hot water storage tank 10) × (hot water storage tank heat radiation loss coefficient) × (predetermined time slot (here, one hour)). It should be noted that the hot water storage tank heat radiation loss coefficient is a value specific to the hot water storage tank 10. The hot water storage tank heat radiation loss coefficient is obtained from an experiment or the like in advance, and stored in the controller 24. The amount of stored heat in the hot water storage tank 10 used in the above calculation is the one previously calculated in step S508. If step S506 is performed for the first time in one operation plan, the amount of stored heat in the hot water storage tank 10 is calculated based on the volume of the hot water storage tank 10 and temperatures detected by the temperature detectors 17 to 22.

Next, the operation plan creator 24c calculates the amount of heat of the heating medium w supplied from the hot water storage tank 10 to the heat load 32 and calculates the amount of heat applied by the backup boiler 11 (step S507). If the amount of stored heat in the hot water storage tank 10 is greater than or equal to a predicted amount of heat consumed by the heat load 32, then the amount of heat of the heating medium w supplied from the hot water storage tank 10 to the heat load 32 is equal to the predicted amount of heat consumed by the heat load 32, and the amount of heat applied by the backup boiler 11 is zero. On the other hand, if the amount of stored heat in the hot water storage tank 10 is less than the predicted amount of heat consumed by the heat load 32, then the amount of heat of the heating medium w supplied from the hot water storage tank 10 to the heat load 32 is equal to the amount of stored heat in the hot water storage tank 10, and a difference between the predicted amount of heat conslumed by the heat load 32 and the amount of heat of the heating medium w supplied from the hot water storage tank 10 to the heat load 32 is the amount of heat applied by the backup boiler 11. It should be noted that, similar to step S506, the amount of stored heat in the hot water storage tank 10 used in the above calculation is, for example, the one previously calculated in step S508.

Next, the operation plan creator 24c calculates the amount of stored heat in the hot water storage tank 10 after the heating medium has been supplied from the hot water storage tank 10 to the heat load 32 (hereinafter, referred to as the amount of post-supply stored heat in the hot water storage tank 10) (step S508). Specifically, the amount of post-supply stored heat in the hot water storage tank 10 is calculated in the following manner: (amount of stored heat in the hot water storage tank 10) - (amount of heat of the heating medium w supplied from the hot water storage tank 10 to the heat load 32) + (heat recovery amount) - (piping heat radiation loss) - (hot water storage tank heat radiation loss). It should be noted that, similar to step S506, the amount of stored heat in the hot water storage tank 10 used in the above calculation is, for example, the one previously calculated in step S508. Moreover, the amount of stored heat in the hot water storage tank 10 calculated at this time is the amount of stored heat in the hot water storage tank 10 in the next predetermined time slot.

Next, the operation plan creator 24c calculates a fuel consumption amount of the distributed power generator 1 (step S509). Specifically, the fuel consumption amount of the distributed power generator 1 can be calculated in the following manner: (amount of electric power generated by the distributed power generator 1) ÷ (power generation efficiency of the distributed power generator 1) × (predetermined time slot (here, one hour)).

Next, the operation plan creator 24c calculates a fuel consumption amount of the backup boiler 11 (step S510). Specifically, the fuel consumption amount of the backup boiler 11 can be calculated in the following manner: (amount of heat applied by the backup boiler 11) ÷ (efficiency of the backup boiler 11). It should be noted that the efficiency of the backup boiler 11 is a value specific to the backup boiler 11. The efficiency of the backup boiler 11 is obtained through an experiment or the like in advance, and is stored in the controller 24.

Next, the operation plan creator 24c determines whether the hot water storage tank 10 is in a full storage state (step S511). The full storage state herein refers to a state where the heating medium w can no longer absorb heat generated by the power generation unit 2. Specifically, the full storage state refers to a state where the heating medium w flowing through the piping 9 cannot receive, at the heat exchanger 6, heat from the cooling water c that has recovered heat generated by the power generation unit 2.

Specifically, the operation plan creator 24c determines the hot water storage tank 10 to be in a full storage state when the amount of post-supply stored heat in the hot water storage tank 10 has exceeded the maximum amount of heat storable in the hot water storage tank 10. The maximum amount of heat storable in the hot water storage tank 10 can be calculated in the following manner: {(temperature of the hot water storage tank in a full storage state) - (temperature of supplementary water)} × (volume of the hot water storage tank) × (specific heat). It should be noted that if the hot water storage tank 10 has become a full storage state, the controller 24 forcibly stops the distributed power generator 1 even if the distributed power generator 1 is supposed to operate according to the operation plan.

Next, the operation plan creator 24c calculates electric power consumption and fuel consumption of the distributed power generator 1 when the distributed power generator 1 performs a start-up operation (step S512). The distributed power generator 1 performs the start-up operation when the operation plan indicates a shift from a power generation stopped state (standby state) of the distributed power generator 1 to a power generation operation. Electric power and a fuel are consumed in the start-up operation until the distributed power generator 1 enters a state of being able to perform power generation. The calculated electric power consumption and fuel consumption are values specific to the distributed power generator 1, and are prestored in the controller 24.

Next, the operation plan creator 24c calculates electric power consumption and fuel consumption of the distributed power generator 1 when the distributed power generator 1 performs a stop operation (step S513). The distributed power generator 1 performs the stop operation when the operation plan indicates a shift from the power generation operation of the distributed power generator 1 to the standby state. The distributed power generator 1 performs the stop operation also in a case where the distributed power generator 1 is forcibly stopped for the reason that the hot water storage tank 10 has become a full storage state. The electric power consumption and fuel consumption of the distributed power generator 1 at the time of performing the stop operation are also values specific to the distributed power generator 1, and are prestored in the controller 24.

Next, the operation plan creator 24c calculates electric power consumption of the distributed power generator 1 when the distributed power generator 1 is standing by (i.e., in a standby state) (step S514). The calculated electric power consumption of the distributed power generator 1 when the distributed power generator 1 is standing by is a value specific to the distributed power generator 1, and is prestored in the controller 24.

Next, the operation plan creator 24c determines whether the calculation has been performed up to the end of the predetermined period (step S515). If the calculation up to the end of the predetermined period has not been completed (No in step S515), the operation plan creator 24c returns to step S501 and repeats steps S501 to S515 until the calculation up to the end of the predetermined period is completed.

On the other hand, if the calculation up to the end of the predetermined period has been completed (Yes in step S515), the controller 24 calculates a primary energy usage amount (step S516). The primary energy usage amount can be calculated in the following manner: (total power purchase amount value) ÷ (power station efficiency) + (total fuel consumption amount value).

The power station efficiency is an overall power station efficiency incorporating, for example, power transmission loss at the system power supply 25. The power station efficiency is a value varying depending on a power station and power grid in a country or region where the distributed power generation system 100 is installed. Therefore, a value suitable for the installation location of the distributed power generation system 100 may be used as the value of the power station efficiency. The power station efficiency may be 0.369. for example.

The total power purchase amount value can be calculated in the following manner: ∑ {(predicted amount of electric power consumed by the electrical load 26) - (amount of electric power generated by the distributed power generator 1) + (electric power consumption at the start-up operation) + (electric power consumption at the stop operation) + (electric power consumption at standing by)} × (predetermined time slot (here, one hour)). The total fuel consumption amount value can be calculated in the following manner: ∑ {(fuel consumption amount of the distributed power generator 1) + (fuel consumption amount of the backup boiler 11) + (fuel consumption at start-up) + (fuel consumption at stopping)}. Here, ∑ indicates summation over the predetermined period (in the present embodiment, the predetermined period is 24 hours).

As described above, the operation plan creator 24c calculates the primary energy usage amount in the predetermined period for each operation plan based on at least electrical load data (the amount of electric power consumed by the electrical load 26) and heat load data (the amount of heat consumed by the heat load 32), and in step S60 (see Fig. 3), selects one operation plan that indicates the highest standard. Accordingly, in the predetermined period, in periods other than the priority period, whether or not to cause the distributed power generator 1 to perform power generation can be determined based on load data.

As described above, the distributed power generation system 100 according to Embodiment 1 is configured such that, in a household where both of the distributed power generator 1 and the solar cell 27 are installed, the distributed power generator 1 is caused to generate electric power during a period in which the solar cell 27 generates electric power, and the electric power generated by the distributed power generator 1 is consumed by the user's electrical load 26. In this manner, the amount of selling of the electric power generated by the solar cell 27 can be maximized, and economic benefits can be increased. Such an increase in economic benefits owing to the installation of the distributed power generator 1 lowers the total cost of the installed distributed power generator 1 (the total cost includes at least the installation cost and the running cost), and makes it possible to spread the use of the distributed power generator 1.

Further, the distributed power generation system 100 according to Embodiment 1 is configured such that when the solar cell 27 is not installed, the operation is performed in the second operation mode which does not take the priority period into account, and thus the predetermined standard (e.g., energy efficiency or environmental friendliness) can be maximized.

### (Embodiment 2)

A distributed power generation system according to Embodiment 2 serves as an example where the controller is configured to: receive information regarding electric power generated by the solar cell; and set the sunrise time based on a start time of power generation by the solar cell, and set the sunset time based on a stop time of power generation by the solar cell. It should be noted that since the fundamental configuration of the distributed power generation system 100 according to Embodiment 2 is the same as that of the distributed power generation system 100 according to Embodiment 1, a detailed description of the configuration of the distributed power generation system 100 according to Embodiment 2 is omitted.

Unlike the distributed power generation system 100 according to Embodiment 1 which uses the sunrise and sunset times prestored in the controller 24, the priority period determiner 24b of the distributed power generation system 100 according to Embodiment 2 is configured to set sunrise and sunset times based on the amount of electric power generated by the solar cell 27, which is measured by the second power measuring device 30.

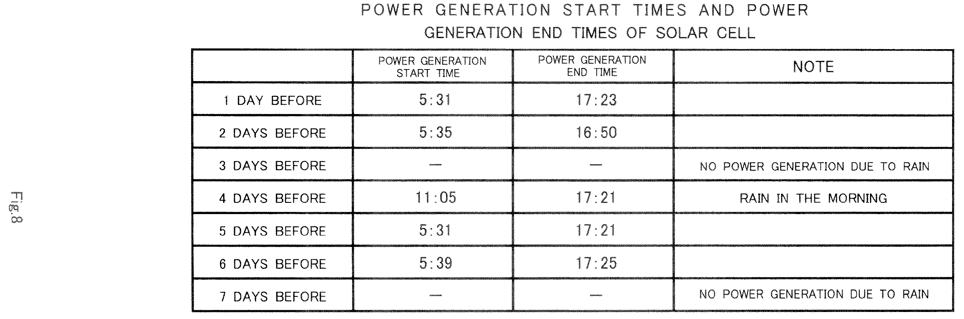

Fig. 8 is a table showing power generation start times and power generation end times of the solar cell for past seven days from a particular day.

Since the solar cell 27 hardly performs power generation in a rainy day, there was no power generation start time and no power generation end time three and seven days prior to the day as shown in Fig. 8. Since there was a rain in the morning four days prior to the day, the power generation start time was relatively late.

Accordingly, in Embodiment 2, among power generation start times during a predetermined number of past days (e.g., seven days), the priority period determiner 24b sets the earliest power generation start time as a sunrise time, and sets the latest power generation start time as a sunset time. In the example of Fig. 8, the sunrise time is 5:31 and the sunset time is 17:25.

The distributed power generation system 100 according to Embodiment 2 with the above-described configuration provides the same operational advantages as those provided by the distributed power generation system 100 according to Embodiment 1.

### (Embodiment 3)

A distributed power generation system according to Embodiment 3 serves as an example where the controller is configured to correct and reduce the priority period based on information regarding: heat supplied by the distributed power generator when the distributed power generator performs power generation in the priority period; and a thermal load in the priority period, the thermal load being predicted from the heat load received by the controller. It should be noted that since the fundamental configuration of the distributed power generation system 100 according to Embodiment 3 is the same as that of the distributed power generation system 100 according to Embodiment 1, a detailed description of the configuration of the distributed power generation system 100 according to Embodiment 3 is omitted.

### [Operations of Distributed Power Generation System]

In Embodiments 1 and 2, sunrise and sunset times define the priority period. However, in cases where the amount of heat that the user uses with the heat load 32 is small, it is sometimes desirable to reduce the priority period. For example, if the amount of heat used by the heat load 32 is small, the hot water storage tank 10 may become a full storage state before the sunset time, causing an operation stop of the distributed power generator 1, or heat may be stored in the hot water storage tank 10 more than necessary, causing an increase in heat radiation loss.

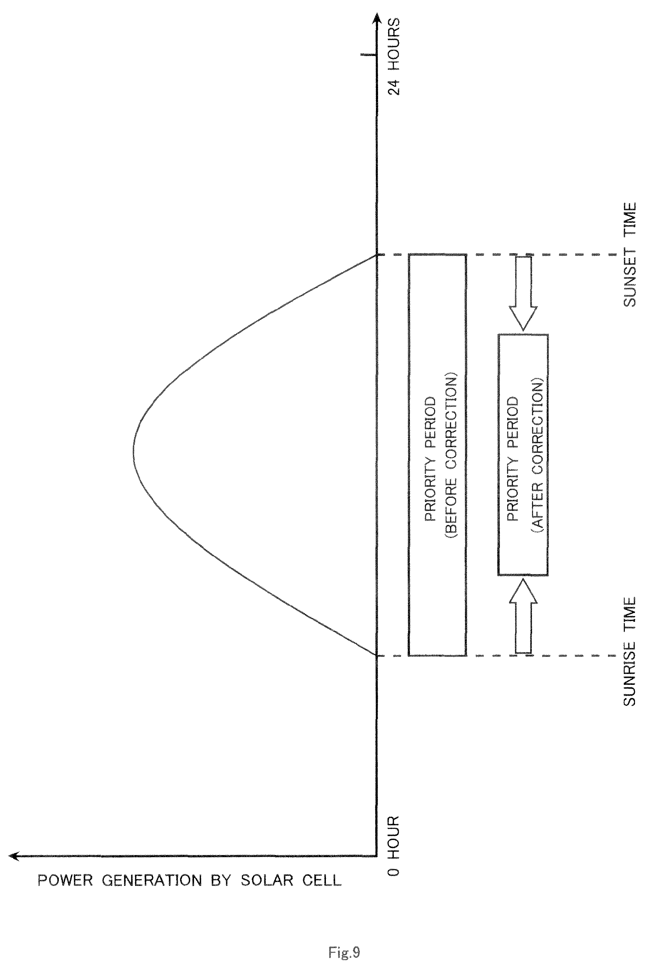

First, a process of reducing the priority period is briefly described with reference to Fig. 9.

Fig. 9 is a conceptual diagram of the process of reducing the priority period.

As shown in Fig. 9, the amount of electric power generated by the solar cell 27 is small around the sunrise time and sunset time, and is great in the middle of the day. Therefore, in the case of reducing the priority period, it is desirable to leave a period between a period around the sunrise time and a period around the sunset time. In this manner, a period in which the solar cell 27 generates a great amount of electric power can be left as the priority period. Moreover, in the case of reducing the priority period, it is desirable that the length of the priority period be set to such a length as not to generate residual heat.

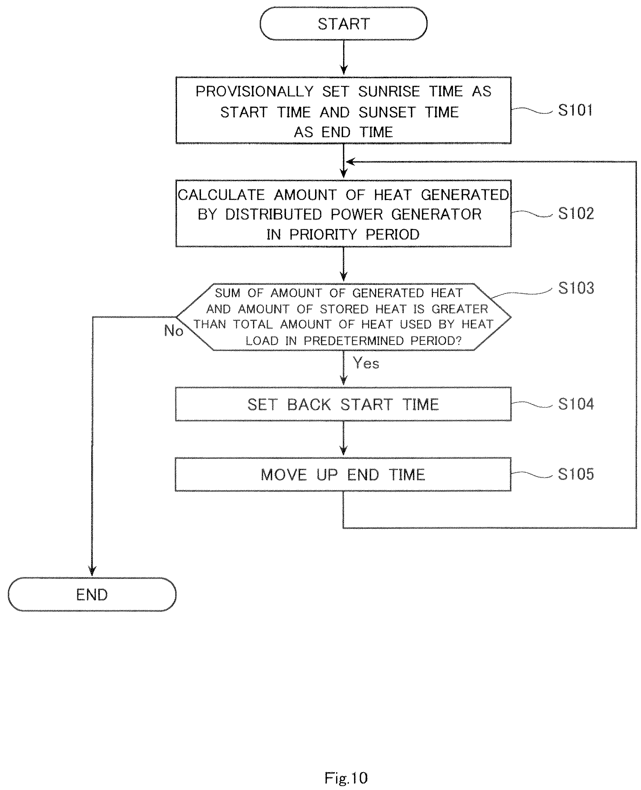

Hereinafter, a process performed in the case of reducing the priority period is described in detail with reference to Fig. 10. It should be noted that the flow shown in Fig. 10 may be performed after step S10 of Fig. 2.

Fig. 10 is a flowchart in the case of reducing the priority period.

As shown in Fig. 10, first, the priority period determiner 24b of the controller 24 provisionally sets a sunrise time as the start time of the priority period and a sunset time as the end time of the priority period (step S101). It should be noted that the sunrise and sunset times may be set in either the method according to Embodiment 1 or the method according to Embodiment 2.

Next, the priority period determiner 24b calculates the amount of heat generated in a case where the distributed power generator 1 performs power generation in the priority period (step S102). Specifically, for each predetermined time slot, the priority period determiner 24b performs calculation of subtracting a piping heat radiation loss from a heat recovery amount, thereby calculating the amount of heat generated in each predetermined time slot. To be more specific, the priority period determiner 24b performs steps S501 to S505 shown in Fig. 6 to calculate a heat recovery amount and a piping heat radiation loss, and calculates the amount of heat generated in each predetermined time slot. Then, the priority period determiner 24b sums up the amounts of heat generated in the respective predetermined time slots, thereby calculating the amount of heat generated in a case where the distributed power generator 1 performs power generation in the priority period.

Next, the priority period determiner 24b determines whether the sum of the amount of heat generated by the distributed power generator 1 and the current amount of stored heat in the hot water storage tank 10 is greater than the total amount of heat used by the heat load 32 in the predetermined period (e.g., 24 hours) (step S103). It should be noted that the total amount of heat used by the heat load 32 is calculated from a predicted amount of heat consumed by the heat load 32.

If the sum of the amount of heat generated by the distributed power generator 1 and the current amount of stored heat in the hot water storage tank 10 is less than or equal to the total amount of heat used by the heat load 32 in the predetermined period (No in step S103), the priority period determiner 24b ends the flow.

On the other hand, if the sum of the amount of heat generated by the distributed power generator 1 and the current amount of stored heat in the hot water storage tank 10 is greater than the total amount of heat used by the heat load 32 in the predetermined period (Yes in step S103), the priority period determiner 24b sets back the start time of the priority period (step S104) and moves up the end time of the priority period (step S105).

It should be noted that the start time is set back or the end time is moved up by, for example, one minute or ten minutes, i.e., by a time that is sufficiently shorter than the priority period. In Embodiment 3, both of the start time and end time of the priority period are changed. However, the present embodiment is not thus limited. For example, only the start time of the priority period may be changed, or only the end time of the priority period may be changed.

Next, the priority period determiner 24b returns to step S102, and repeats steps S102 to S105 until the sum of the amount of heat generated by the distributed power generator 1 and the current amount of stored heat in the hot water storage tank 10 becomes less than or equal to the total amount of heat used by the heat load 32 in the predetermined period. This makes it possible to gradually reduce the priority period and suppress excessive remaining of the heat stored in the hot water storage tank 10.

The distributed power generation system 100 according to Embodiment 3 with the above-described configuration provides the same operational advantages as those provided by the distributed power generation system 100 according to Embodiment 1. According to the distributed power generation system 100 of Embodiment 3, in a case where the amount of heat used by the heat load 32 is small, the amount of heat generated by the distributed power generator 1 and the amount of heat used by the user are balanced out, which makes it possible to suppress the occurrence of the following situations: the hot water storage tank 10 becomes a Full storage state, causing a stop of the power generation operation of the distributed power generator 1; and heat radiation loss of, for example, the hot water storage tank 10 increases.

### (Embodiment 4)

A distributed power generation system according to Embodiment 4 serves as an example where the distributed power generator includes: a power generation unit configured to perform joint supplying of the electric power and the heat; and a heat accumulator configured to store the heat supplied from the power generation unit. The controller is configured such that if the heat stored in the heat accumulator is in an amount less than or equal to a first heat amount which is set in advance, the controller causes the power generation unit to perform power generation in the priority period with maximum output, and if the heat stored in the heat accumulator is in an amount greater than the first heat amount, the controller sets an amount of electric power to be generated by the power generation unit in the priority period so as to follow the load data of the electrical load and causes the power generation unit to perform power generation in the priority period in a manner to follow the load data of the electrical load, or the controller causes the power generation unit to perform power generation in the priority period with first output which is lower than the maximum output.

It should be noted that since the fundamental configuration of the distributed power generation system 100 according to Embodiment 4 is the same as that of the distributed power generation system 100 according to Embodiment 1, a detailed description of the configuration of the distributed power generation system 100 according to Embodiment 4 is omitted.

### [Operations of Distributed Power Generation System]

Similar to the distributed power generation systems 100 according to Embodiments 1 to 3, the distributed power generation system 100 according to Embodiment 4 performs the power generation operation of the distributed power generator 1 in accordance with an operation plan. However, the distributed power generation system 100 according to Embodiment 4 performs the power generation operation of the distributed power generator 1 in the priority period as described below.

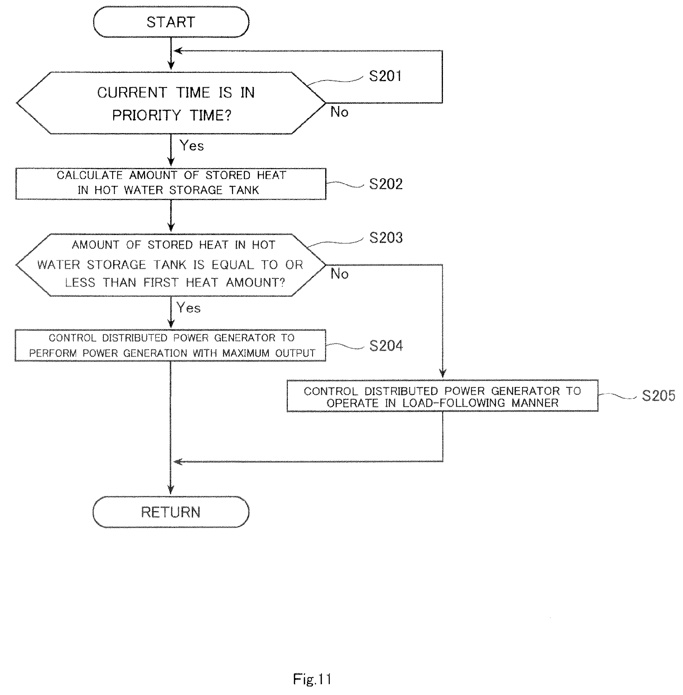

Fig. 11 is a flowchart schematically showing the power generation operation of the distributed power generator (power generation unit) of the distributed power generation system according to Embodiment 4 in the priority period.

As shown in Fig. 11, the controller 24 determines whether the current time is in the priority period (step S201). If the current time is not in the priority period (No in step S201), the controller 24 repeats step S201 until the current time falls within the priority period. On the other hand, if the current time is in the priority period (Yes in step S201), the controller 24 proceeds to step S202.

In step S202, the controller 24 calculates the amount of stored heat in the hot water storage tank 10. Specifically, the controller 24 calculates the amount of stored heat in the hot water storage tank 10 based on a temperature detected by the temperature detector 12. temperatures detected by the temperature detectors 17 to 22, and the volume of the hot water storage tank 10.

Next, the controller 24 determines whether or not the amount of stored heat in the hot water storage tank 10 calculated in step S202 is less than or equal to a first heat amount.

The first heat amount herein refers to such an amount of heat as not to cause the hot water storage tank 10 to become a full storage state in a case where the distributed power generator 1 performs power generation with maximum output from the current time to the end time of the priority period. The first heat amount can be calculated based on, for example, the volume of the hot water storage tank 10 through an experiment or the like in advance. The first heat amount may or may not vary depending on the length of time from the current time to the end time of the priority period. The first heat amount may be, for example, 1/4 of the maximum amount of heat storable in the hot water storage tank 10 or 1/3 of the maximum amount of heat storable in the hot water storage tank 10.

If the amount of stored heat in the hot water storage tank 10 is less than or equal to the first heat amount (Yes in step S203), the controller 24 controls the distributed power generator 1 (power generation unit 2) to perform power generation with maximum output (step S204) and returns to step S201. On the other hand, if the amount of stored heat in the hot water storage tank 10 is greater than the first heat amount, the controller 24 controls the distributed power generator 1 (power generation unit 2) to operate in a load-following manner (step S205) and returns to step S201.

The distributed power generation system 100 according to Embodiment 4 with the above-described configuration provides the same operational advantages as those provided by the distributed power generation system 100 according to Embodiment 1.

In the distributed power generation system 100 according to Embodiment 4, even if the distributed power generator 1 is configured to generate electric power basically with maximum output, the distributed power generator 1 can be caused to generate electric power in the priority period in which the solar cell 27 generates electric power, and the amount of selling of the electric power generated by the solar cell 27 can be maximized, which makes it possible to increase economic benefits.

Further, according to the distributed power generation system 100 of Embodiment 4, by performing power generation with the distributed power generator 1 when reverse power flow from the distributed power generator 1 is allowed, the amount of selling of electric power generated by the solar cell 27 can be maximized and the amount of electric power generated by the distributed power generator 1 can be increased.

In the Embodiment 4, if the amount of stored heat in the hot water storage tank 10 is greater than the first heat amount, the distributed power generator 1 (power generation unit 2) is caused to operate in a load-following manner. However, the present embodiment is not thus limited. Alternatively, in a case where the amount of stored heat in the hot water storage tank 10 is greater than the first heat amount, the distributed power generator 1 (power generation unit 2) may be caused to perform power generation with first output which is lower than the maximum output.

The first output herein refers to such an output (power generation amount) as not to cause the hot water storage tank 10 to become a full storage state due to the amount of heat generated by the distributed power generator 1 in a case where the distributed power generator 1 performs power generation with the first output from the current time to the end time of the priority period. The first output can be calculated through an experiment or the like in advance. The first output may or may not vary depending on the length of time from the current time to the end time of the priority period. The first output may be 1/4 or 1/3 of the maximum output of the distributed power generator 1.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. In addition, various inventions can be made by suitable combinations of a plurality of components disclosed in the above embodiments.

### Industrial Applicability

The distributed power generation system and the method of operating the distributed power generation system according to the present invention are useful in the field of distributed power generator technology since they are capable of maximizing the amount of selling of electric power generated by a solar cell and capable of operating a distributed power generator in such a manner as to maximize a predetermined standard (energy efficiency or environmental friendliness).

### Reference Signs List

- 1: distributed power generator
- 2: power generation unit
- 3: inverter
- 4: pump
- 5: cooling water piping
- 6: heat exchanger
- 7: pump
- 8: reverse power flow prevention heater
- 9: piping
- 9a: piping
- 9b: piping
- 9c: piping
- 9d: piping
- 10: hot water storage tank
- 11: backup boiler
- 12: temperature detector
- 13: temperature detector
- 14: flow rate detector
- 15: supplementing passage
- 16: hot water sending passage
- 17: temperature detector
- 18: temperature detector
- 19: temperature detector
- 20: temperature detector
- 21: temperature detector
- 22: temperature detector
- 23: three-way valve
- 24: controller
- 24a: solar cell detector
- 24b: priority period determiner
- 24c: operation plan creator
- 24d: power generation controller
- 25: system power supply
- 26: electrical load
- 27: solar cell
- 28: inverter
- 29: first power measuring device
- 30: second power measuring device
- 31: third power measuring device
- 32: heat load
- 33: electrical cable
- 34: electrical cable
- 35: electrical cable
- 36: electrical cable
- 37: electrical cable
- 100: distributed power generation system

## Claims

1. A distributed power generation system for being installed in combination with a solar cell (27), comprising:
a distributed power generator (1) configured to perform power generation by using a fuel supplied thereto to generate electric power and heat, and supply the electric power and the heat to an electrical load (26) and a heat load (32); and
a controller (24) configured to create an operation plan of the distributed power generator (1), and control at least start-up and stop of the distributed power generator (1), wherein
the controller (24) is configured to receive load data of at least one of the electrical load (26) and the heat load (32), and
the controller (24) is further configured to execute a first operation mode including the step of controlling the distributed power generator (1) based on the operation plan; and
the distributed power generator (1) includes:
a power generation unit (2) configured to perform joint supplying of the electric power and the heat; and
a heat accumulator (10) configured to store the heat supplied from the power generation unit (2),
**characterized in that**
the operation plan specifies, when to cause the distributed power generator (1) to perform power generation and when to stop the distributed power generator (1);
the first operation mode further includes the steps of setting at least one of a start-up time and a stop time of the distributed power generator (1) to create the operation plan, by setting a priority period based on a sunrise time and a sunset time, such that the operation plan includes, at least partly, the priority period, and determining based on at least the load data whether to cause the distributed power generator (1) to perform power generation in the other periods different from the priority period; and
the controller (24) is further configured to correct and reduce the priority period gradually in an iterative procedure, based on a comparison of a sum of the heat supplied by the distributed power generator (1) when the distributed power generator (1) performs power generation in the priority period and a heat amount stored in the heat accumulator (10) with a heat amount used in the priority period, the heat amount being predicted from the load data of the heat load (32), the load data being received by the controller (24).

2. The distributed power generation system according to claim 1, wherein
the controller (24) is configured such that
if the heat stored in the heat accumulator (10) is in an amount less than or equal to a first heat amount which is set in advance, the controller (24) causes the power generation unit (2) to perform power generation in the priority period with maximum output, and
if the heat stored in the heat accumulator (10) is in an amount greater than the first heat amount, the controller (24) sets an amount of electric power to be generated by the power generation unit (2) in the priority period so as to follow the load data of the electrical load (26) and causes the power generation unit (2) to perform power generation in the priority period in a manner to follow the load data of the electrical load (26), or the controller (24) causes the power generation unit (2) to perform power generation in the priority period with first output which is lower than the maximum output.

3. The distributed power generation system according to claim 1, wherein
the controller (24) is configured to set an amount of electric power to be generated by the power generation unit (2) in the priority period so as to follow the load data of the electrical load (26), and cause the power generation unit (2) to perform power generation in the priority period in a manner to follow the load data of the electrical load (26).

4. The distributed power generation system according to any one of claims 1 to 3, wherein the controller (24) further includes a solar cell detector (24a) configured to detect installation of the solar cell (27), and
the controller (24) is configured to execute the first operation mode when the solar cell detector (24a) has detected installation of the solar cell (27).

5. The distributed power generation system according to claim 4, wherein
the controller (24) is configured to execute a second operation mode when the solar cell detector (24a) detects no installation of the solar cell (27), the second operation mode including:
creating the operation plan of the distributed power generator (1) without taking the priority period into account; and
controlling the distributed power generator (1) based on the operation plan.

6. The distributed power generation system according to any one of claims 1 to 5, wherein the distributed power generation system is configured such that supply of electric power generated by the distributed power generator (1) to the electrical load (26) is prioritized over supply of electric power generated by the solar cell (27) to the electrical load (26).

7. The distributed power generation system according to any one of claims 1 to 6, wherein the controller (24) stores:
a calendar; and
the sunrise time and the sunset time which are set in conjunction with a date in the calendar.

8. The distributed power generation system according to any one of claims 1 to 7, wherein the controller (24) is configured to:
receive information regarding electric power generated by the solar cell (27); and
set the sunrise time based on a start time of power generation by the solar cell (27), and
set the sunset time based on a stop time of power generation by the solar cell (27).

9. A method of controlling a distributed power generation system (100) for being installed in combination with a solar cell (27), the distributed power generation system (100) including:
a distributed power generator (1) configured to perform power generation by using a fuel supplied thereto to generate electric power and heat, and supply the electric power and the heat to an electrical load (26) and a heat load (32); and
a controller (24) configured to create an operation plan of the distributed power generator (1), and control at least start-up and stop of the distributed power generator (1).
wherein the distributed power generator (1) includes a power generation unit (2) configured to perform joint supplying of the electric power and the heat and a heat accumulator (10) configured to store the heat supplied from the power generation unit (2),
the method comprising the steps of
receiving load data of at least one of the electrical load (26) and the heat load (32);
creating (S30; S101, S104, S105) the operation plan by setting at least one of a start-up time and a stop time of the distributed power generator (1); and
controlling (S70) the distributed power generator (1) based on the operation plan;
**characterized in that**
the operation plan specifies, when to cause the distributed power generator (1) to perform power generation and when to stop the distributed power generator (1); and by
setting (S10) a priority period based on a sunrise time and a sunset time such that the operation plan includes, at least partly, the priority period;
determining based on at least the load data whether to cause the distributed power generator (1) to perform power generation in the other periods different from the priority period; and
correcting and reducing (S104, S105) the priority period gradually in an iterative procedure, based on a comparison (S103) of a sum of the heat supplied by the distributed power generator (1) when the distributed power generator (1) performs power generation in the priority period and a heat amount stored in the heat accumulator (10) with a heat amount used in the priority period, the heat amount being predicted from the load data of the heat load (32), the load data being received by the controller (24).

## Patentansprüche

1. Dezentrales Energieerzeugungssystem zur Installation in Verbindung mit einer Solarzelle (27), umfassend:
einen dezentralen Energieerzeuger (1), eingerichtet zum Ausführen von Energieerzeugung unter Verwendung eines ihm zugeführten Brennstoffs, um elektrische Energie und Wärme zu erzeugen, und die elektrische Energie und die Wärme einem elektrischen Verbraucher (26) und einem Wärmeverbraucher (32) zuzuführen; und
einen Controller (24), eingerichtet zum Erzeugen eines Betriebsplans des dezentralen Energieerzeugers (1) und zum Steuern wenigstens des Betriebsbeginns und des Anhaltens des dezentralen Energieerzeugers (1), wobei
der Controller (24) eingerichtet ist, Belastungsdaten wenigstens des elektrischen Verbrauchers (26) oder des Wärmeverbrauchers (32) zu empfangen, und
der Controller (24) weiterhin eingerichtet ist, einen ersten Betriebsmodus auszuführen, der den Schritt des Steuerns des dezentralen Energieerzeugers (1), beruhend auf dem Betriebsplan enthält; und
der dezentrale Energieerzeuger (1) enthält;
eine Energieerzeugungseinheit (2), eingerichtet zum Ausführen einer kombinierten Bereitstellung der elektrischen Energie und der Wärme; und
einen Wärmespeicher (10), eingerichtet zum Speichern der von der Energieerzeugungseinheit (2) bereitgestellten Wärme,
**dadurch gekennzeichnet, dass**
der Betriebsplan angibt, wann der dezentrale Energieerzeuger (1) zu veranlassen ist, Energieerzeugung auszuführen und wann der dezentrale Energieerzeuger (1) anzuhalten ist;
der erste Betriebsmodus weiterhin die Schritte enthält des Festsetzens wenigstens einer Zeit des Betriebsbeginns oder einer Zeit des Anhaltens des dezentralen Energieerzeugers (1), um den Betriebsplan zu erzeugen, indem ein Prioritätszeitabschnitt beruhend auf einer Zeit des Sonnenaufgangs und einer Zeit des Sonnenuntergangs festgesetzt wird, so dass der Betriebsplan wenigstens teilweise den Prioritätszeitabschnitt enthält, und des Bestimmens, beruhend auf wenigstens den Belastungsdaten, ob der dezentrale Energieerzeuger (1) zu veranlassen ist, Energieerzeugung in den anderen, von dem Prioritätszeitabschnitt verschiedenen Zeitabschnitten auszuführen, und
der Controller (24) weiterhin eingerichtet ist, den Prioritätszeitabschnitt graduell in einer iterativen Prozedur zu korrigieren und zu reduzieren, beruhend auf einem Vergleich einer Summe der von dem dezentralen Energieerzeuger (1) bereitgestellten Wärme, wenn der dezentrale Energieerzeuger (1) Energieerzeugung in dem Prioritätszeitabschnitt ausführt und einer in dem Wärmespeicher (10) gespeicherten Wärmemenge mit einer in dem Prioritätszeitabschnitt verwendeten Wärmemenge, wobei die Wärmemenge aus den Belastungsdaten des Wärmeverbrauchers (32) vorhergesagt wird, und die Beiastungsdaten durch den Controller (24) empfangen werden.

2. Dezentrales Energieerzeugungssystem nach Anspruch 1, wobei
der Controller (24) so eingerichtet ist, dass
wenn die in dem Wärmespeicher (10) gespeicherte Wärme eine Menge beinhaltet, die kleiner oder gleich einer vorab festgesetzten Wärmemenge ist, der Controller (24) die Energieerzeugungseinheit (2) veranlasst, in dem Prioritätszeitabschnitt Energieerzeugung mit maximalem Ausstoß auszuführen, und
wenn die in dem Wärmespeicher (10) gespeicherte Wärme eine Menge beinhaltet, die größer ist als die erste Wärmemenge, der Controller (24) eine Menge von durch die Energieerzeugungseinheit (2) in dem Prioritätszeitabschnitt zu erzeugenden elektrischen Energie so festsetzt, dass sie den Belastungsdaten des elektrischen Verbrauchers (26) folgt und die Energieerzeugungseinheit (2) veranlasst, Energieerzeugung in dem Prioritätszeitabschnitt derart auszuführen, dass sie den Belastungsdaten der elektrischen Verbrauchers (26) folgt, oder der Controller (24) die Energieerzeugungseinheit (2) veranlasst, Energieerzeugung in dem Prioritätszeitabschnitt mit einem ersten Ausstoß, der geringer ist als der maximale Ausstoß, auszuführen.

3. Dezentrales Energieerzeugungssystem nach Anspruch 1, wobei
der Controller (24) eingerichtet ist, eine Menge an von der Energieerzeugungseinheit (2) in dem Prioritätszeitabschnitt zu erzeugende elektrische Energie so festzusetzen, dass sie den Belastungsdaten des elektrischen Verbrauchers (26) folgt, und die Energieerzeugungseinheit (2) zu veranlassen, Energieerzeugung in dem Prioritätszeitabschnitt derart auszuführen, dass sie den Belastungsdaten des elektrischen Verbrauchers (26) folgt.

4. Dezentrales Energieerzeugungssystem nach einem der Ansprüche 1 bis 3, wobei
der Controller (24) weiterhin einen Solarzellendetektor (24a) enthält, der eingerichtet ist, um die Installation der Solarzelle (27) zu erkennen, und
der Controller (24) eingerichtet ist, den ersten Betriebsmodus auszuführen, wenn der Solarzellendetektor (24a) die Installation der Solarzelle (27) erkannt hat.

5. Dezentrales Energieerzeugungssystem nach Anspruch 4, wobei
der Controller (24) eingerichtet ist, einen zweiten Betriebsmodus auszuführen, wenn der Solarzellendetektor (24a) keine Installation der Solarzelle (27) erkennt, wobei der zweite Betriebsmodus enthält:
Erzeugen des Betriebsplans des dezentralen Energieerzeugers (1), ohne den Prioritätszeitabschnitt zu berücksichtigen; und
Steuern des dezentralen Energieerzeugers (1), beruhend auf dem Betriebsplan.

6. Dezentrales Energieerzeugungssystem nach einem der Ansprüche 1 bis 5, wobei das dezentrale Energieerzeugungssystem so eingerichtet ist, dass die Zuführung von dem dezentralen Energieerzeuger (1) erzeugter elektrischer Energie zu dem elektrischen Verbraucher (26) über der Zuführung von durch die Solarzelle (27) erzeugter elektrischer Energie zu dem elektrischen Verbraucher (26) priorisiert wird.

7. Dezentrales Energieerzeugungssystem nach einem der Ansprüche 1 bis 6, wobei
der Controller (24) speichert:
einen Kalender; und
die Zeit des Sonnenaufgangs und die die Zeit Sonnenuntergangs, die in Verbindung mit einem Datum in dem Kalender festgesetzt werden.

8. Dezentrales Energieerzeugungssystem nach einem der Ansprüche 1 bis 7, wobei der Controller (24) eingerichtet ist, um:
Information bezüglich einer durch die Solarzelle (27) erzeugten elektrischen Energie zu empfangen; und
die Zeit des Sonnenaufgangs, beruhend auf einer Anfangszeit der Energieerzeugung durch die Solarzelle (27) festzusetzen, und die die Zeit Sonnenuntergangs, basierend auf einer Zeit der Beendigung der Energieerzeugung durch die Solarzelle (27) festzusetzen.

9. Verfahren des Steuerns eines dezentralen Energieerzeugungssystems (100) zur Installation in Verbindung mit einer Solarzelle (27), wobei das dezentrale Energieerzeugungssystem (100) enthält:
einen dezentralen Energieerzeuger (1), eingerichtet zum Ausführen von Energieerzeugung unter Verwendung eines ihm zugeführten Brennstoffs, um elektrische Energie und Wärme zu erzeugen, und die elektrische Energie und die Wärme einem elektrischen Verbraucher (26) und einem Wärmeverbraucher (32) zuzuführen; und
einen Controller (24), eingerichtet zum Erzeugen eines Betriebsplans des dezentralen Energieerzeugers (1) und zum Steuern wenigstens des Betriebsbeginns und des Anhaltens des dezentralen Energieerzeugers (1),
wobei der dezentrale Energieerzeuger (1) eine Energieerzeugungseinheit (2), eingerichtet zum Ausführen einer kombinierten Bereitstellung der elektrischen Energie und der Wärme und einen Wärmespeicher (10), eingerichtet zum Speichern der von der Energieerzeugungseinheit (2) bereitgestellten Wärme enthält,
das Verfahren die Schritte umfasst
Empfangen von Belastungsdaten wenigstens des elektrischen Verbrauchers (26) oder des Wärmeverbrauchers (32);
Erzeugen (S30; S101, S104, S105) des Betriebsplans durch Festsetzen wenigstens einer Zeit des Betriebsbeginns oder einer Zeit des Anhaltens des dezentralen Energieerzeugers (1); und
Steuern (S70) des dezentralen Energieerzeugers (1), beruhend auf dem Betriebsplan,
**dadurch gekennzeichnet, dass**
der Betriebsplan angibt, wann der dezentrale Energieerzeuger (1) zu veranlassen ist, Energieerzeugung auszuführen und wann der dezentrale Energieerzeuger (1) anzuhalten ist; und durch
Festsetzen (S10) eines Prioritätszeitabschnitts, beruhend auf einer Zeit des Sonnenaufgangs und einer Zeit des Sonnenuntergangs, so dass der Betriebsplan wenigstens teilweise den Prioritätszeitabschnitt enthält,
Bestimmen, beruhend auf wenigstens den Belastungsdaten, ob der dezentrale Energieerzeuger (1) zu veranlassen ist, Energieerzeugung in den anderen, von dem Prioritätszeitabschnitt verschiedenen Zeitabschnitten auszuführen; und
graduelles Korrigieren und Reduzieren (S104, S105) des Prioritätszeitabschnitts in einer iterativen Prozedur, beruhend auf einem Vergleich (S103) einer Summe der von dem dezentralen Energieerzeuger (1) bereitgestellten Wärme, wenn der dezentrale Energieerzeuger (1) Energieerzeugung in dem Prioritätszeitabschnitt ausführt und einer in dem Wärmespeicher (10) gespeicherten Wärmemenge mit einer in dem Prioritätszeitabschnitt verwendeten Wärmemenge, wobei die Wärmemenge aus den Belastungsdaten des Wärmeverbrauchers (32) vorhergesagt wird, und die Belastungsdaten durch den Controller (24) empfangen werden.

## Revendications

1. Système réparti de génération d'énergie destiné à être installé en association avec une cellule solaire (27), comprenant :
un générateur de puissance réparti (1) configuré pour effectuer une génération de puissance en utilisant un carburant qui lui est fourni pour générer de la puissance électrique et de la chaleur, et pour fournir l'énergie électrique et la chaleur à une charge électrique (26) et à une charge thermique (32), et
un contrôleur (24) configuré pour créer un plan d'opérations pour le générateur de puissance réparti (1) et commander au moins le démarrage et l'arrêt du générateur de puissance réparti (1),
le contrôleur (24) étant configuré pour recevoir des données de charge d'au moins l'une de la charge électrique (26) et de la charge thermique (32), et
le contrôleur (24) étant en outre configuré pour exécuter un premier mode de fonctionnement incluant l'étape consistant à commander le générateur de puissance réparti (1) sur la base du plan d'opérations, et
le générateur de puissance réparti (1) inclut :
une unité de génération de puissance (2) configurée pour effectuer la fourniture conjointe de l'énergie électrique et de la chaleur, et
un accumulateur de chaleur (10) configuré pour stocker la chaleur fournie à partir de l'unité de génération de puissance (2),
**caractérisé en ce que**
le plan d'opérations spécifie le moment où amener le générateur de puissance réparti (1) à effectuer une génération de puissance et le moment où arrêter le générateur de puissance réparti (1),
le premier mode de fonctionnement inclut en outre les étapes d'établissement d'au moins l'un d'un instant de démarrage et d'un instant d'arrêt du générateur de puissance réparti (1) pour créer le plan d'opérations, en fixant une période de priorité fondée sur l'heure de lever du soleil et l'heure de coucher du soleil, de telle sorte que le plan d'opérations inclue, au moins partiellement, la période de priorité ; et en déterminant, sur la base d'au moins les données de charge, s'il faut amener le générateur de puissance réparti (1) à effectuer une génération de puissance dans les autres périodes qui diffèrent de la période de priorité, et
le contrôleur (24) est en outre configuré pour corriger et réduire progressivement la période de priorité selon une procédure itérative, fondée sur la comparaison de la somme de la chaleur fournie par le générateur de puissance réparti (1), quand le générateur de puissance réparti (1) effectue une génération de puissance dans la période de priorité, et d'une quantité de chaleur stockée dans l'accumulateur de chaleur (10), avec une quantité de chaleur utilisée dans la période de priorité, la quantité de chaleur étant prédite à partir des données de charge de la charge thermique (32), les données de charge étant reçues par le contrôleur (24).

2. Système réparti de génération d'énergie selon la revendication 1, dans lequel :
le contrôleur (24) est configuré de telle sorte que :
si la chaleur stockée dans l'accumulateur de chaleur (10) se trouve en quantité inférieure ou égale à une première quantité de chaleur qui est fixée à l'avance, le contrôleur (24) amène l'unité de génération de puissance (2) à effectuer une génération de puissance dans la période de priorité en présentant la valeur de sortie la plus grande, et
si la chaleur stockée dans l'accumulateur de chaleur (10) se trouve en quantité supérieure à la première quantité de chaleur, le contrôleur (24) fixe une quantité de puissance électrique générée par l'unité de génération de puissance (2) dans la période de priorité de façon à suivre les données de charge de la charge électrique (26), et il amène l'unité de génération de puissance (2) à effectuer une génération de puissance dans la période de priorité de façon à suivre les données de charge de la charge électrique (26), ou bien le contrôleur (24) amène l'unité de génération de puissance (2) à effectuer une génération de puissance dans la période de priorité en présentant une première sortie qui est inférieure à la valeur de sortie la plus grande.

3. Système réparti de génération d'énergie selon la revendication 1, dans lequel :
le contrôleur (24) est configuré pour fixer une quantité de puissance électrique à générer par l'unité de génération de puissance (2) dans la période de priorité de façon à suivre les données de charge de la charge électrique (26), et il amène l'unité de génération de puissance (2) à effectuer une génération de puissance dans la période de priorité de manière à suivre les données de charge de la charge électrique.

4. Système réparti de génération d'énergie selon l'une quelconque des revendications 1 à 3, dans lequel
le contrôleur (24) inclut en outre un détecteur de cellule solaire (24a) configuré pour détecter l'installation de la cellule solaire (27), et
le contrôleur (24) est configuré pour exécuter le premier mode de fonctionnement lorsque le détecteur de cellule solaire (24a) a détecté l'installation de la cellule solaire (27).

5. Système réparti de génération d'énergie selon la revendication 4, dans lequel :
le contrôleur (24) est configuré pour exécuter un second mode de fonctionnement lorsque le détecteur de cellule solaire (24a) ne détecte aucune installation de cellule solaire (27), le second mode de fonctionnement incluant :
la création du plan d'opérations du générateur de puissance réparti (1) sans prendre en compte la période de priorité, et
la commande du générateur de puissance réparti (1) sur la base du plan d'opérations.

6. Système réparti de génération d'énergie selon l'une quelconque des revendications 1 à 5, dans lequel le système réparti de génération d'énergie est configuré de telle sorte que la fourniture d'énergie électrique générée par le générateur de puissance réparti (1) à la charge électrique (26) prend priorité sur la fourniture d'énergie électrique générée par la cellule solaire (27) à la charge électrique (26).

7. Système réparti de génération d'énergie selon l'une quelconque des revendications 1 à 6, dans lequel :
le contrôleur (24) stocke :
un calendrier, et
l'instant de lever du soleil et l'instant de coucher du soleil qui sont fixés conjointement avec une date du calendrier.

8. Système réparti de génération d'énergie selon l'une quelconque des revendications 1 à 7, dans lequel :
le contrôleur (24) est configuré pour :
recevoir des informations concernant la puissance électrique générée par la cellule solaire (27), et
régler l'instant de lever du soleil sur la base de l'instant de début de la génération de puissance par la cellule solaire (27), et
régler l'instant de coucher du soleil sur la base de l'instant d'arrêt de la génération de puissance par la cellule solaire (27).

9. Procédé de commande d'un système réparti de génération d'énergie (100) destiné à être installé en association avec une cellule solaire (27), le système réparti de génération d'énergie (100) incluant :
un générateur de puissance réparti (1) configuré pour effectuer une génération de puissance en utilisant un carburant qui lui est fourni pour générer de la puissance électrique et de la chaleur, et pour fournir l'énergie électrique et la chaleur à une charge électrique (26) et à une charge thermique (32), et
un contrôleur (24) configuré pour créer un plan d'opérations du générateur de puissance réparti (1) et pour commander au moins le démarrage et l'arrêt du générateur de puissance réparti (1),
dans lequel le générateur de puissance réparti (1) inclut une unité de génération de puissance (2) configurée pour effectuer la fourniture conjointe de la puissance électrique et de la chaleur ainsi qu'un accumulateur de chaleur (10) configuré pour stocker la chaleur fournie à partir de l'unité de génération de puissance (2),
le procédé comprenant les étapes suivantes :
la réception de données de charge d'au moins l'une de la charge électrique (26) et de la charge thermique (32),
la création (S30, 8101, S104, S105) du plan d'opérations en fixant au moins l'un d'un instant de démarrage et d'un instant d'arrêt du générateur de puissance réparti (1), et
la commande (S70) du générateur de puissance réparti (1) sur la base du plan d'opérations,
**caractérisé en ce que**
le plan d'opérations spécifie le moment où amener le générateur de puissance réparti (1) à effectuer une génération de puissance et le moment où stopper le générateur de puissance réparti (1), et il fixe (S10) une période de priorité fondée sur l'instant de lever du soleil et l'instant de coucher du soleil de telle sorte que le plan d'opérations inclue, au moins partiellement, la période de priorité,
il détermine, sur la base d'au moins les données de charge, s'il faut amener le générateur de puissance réparti (1) à effectuer une génération de puissance dans les autres périodes qui diffèrent de la période de priorité, et
il corrige et il réduit (S104, S105) progressivement la période de priorité selon une procédure itérative sur la base de la comparaison (S103) de la somme de la chaleur fournie par le générateur de puissance réparti (1), quand le générateur de puissance réparti (1) effectue une génération de puissance dans la période de priorité, et d'une quantité de chaleur stockée dans l'accumulateur de chaleur (10), avec une quantité de chaleur utilisée dans la période de priorité, la quantité de chaleur étant prédite à partir des données de charge de la charge thermique (32), les données de charge étant reçues par le contrôleur (24).
